(19)

**Europäisches Patentamt**
**European Patent Office**
**Office européen des brevets**

(11) **EP 4 174 121 A1**

(12) **EUROPEAN PATENT APPLICATION**
published in accordance with Art. 153(4) EPC

(43) Date of publication:
**03.05.2023 Bulletin 2023/18**

(21) Application number: **21832009.1**

(22) Date of filing: **29.06.2021**

(51) International Patent Classification (IPC):
*C08J 9/16* (2006.01)

(52) Cooperative Patent Classification (CPC):
**C08J 9/16**

(86) International application number:
**PCT/JP2021/024453**

(87) International publication number:
**WO 2022/004692 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020 JP 2020113414**

(71) Applicant: **Kaneka Corporation**
**Osaka-shi, Osaka 530-8288 (JP)**

(72) Inventors:
• **KOBAYASHI, Tsuyoshi**
**Takasago-shi, Hyogo 676-8688 (JP)**
• **SUZUKI, Kirito**
**Takasago-shi, Hyogo 676-8688 (JP)**
• **KIGUCHI, Taro**
**Takasago-shi, Hyogo 676-8688 (JP)**

(74) Representative: **Vossius & Partner**
**Patentanwälte Rechtsanwälte mbB**
**Siebertstraße 3**
**81675 München (DE)**

(54) **EXPANDABLE PARTICLES OF METHYL-METHACRYLATE-BASED RESIN, EXPANDED PARTICLES OF METHYL-METHACRYLATE-BASED RESIN, MOLDED FOAM OF METHYL-METHACRYLATE-BASED RESIN, AND EVAPORATIVE PATTERN**

(57) An object is to provide expandable methyl methacrylate-based resin particles capable of efficiently providing a foamed molded product that is excellent in internal fusibility. The expandable methyl methacrylate-based resin particles contain a blowing agent and a base resin that contains a methyl methacrylate unit and an acrylic ester unit. The expandable methyl methacrylate-based resin particles are excellent in expandability, and are capable of providing expanded particles having low expandability and excellent shrinkage inhibitive property after heating.

EP 4 174 121 A1

**Description**

Technical Field

The present invention relates to expandable methyl methacrylate-based resin particles, methyl methacrylate-based resin expanded particles, a methyl methacrylate-based resin foamed molded product, and an evaporative pattern.

Background Art

As a technique for carrying out metal casting, evaporative pattern casting technique (full mold technique) is known. The evaporative pattern casting technique is a technique for producing a casting by burying a pattern made of a foamed molded product in casting sand and pouring a molten metal to the foamed molded product so that the foamed molded product is replaced with the metal. The full mold technique uses a foamed molded product of a methyl methacrylate-based polymer from the viewpoint of reduction in a residue remaining after a casting process. As the foamed molded product for casting, a piece cut off from a large block molded product is often used.

As expandable methyl methacrylate-based resin particles for producing a foamed molded product of a methyl methacrylate-based polymer, for example, expandable methyl methacrylate-based resin particles obtained by polymerizing methyl methacrylate, acrylic ester, and a polyfunctional monomer are disclosed in Patent Literature 1.

Patent Literature 2 discloses a method for producing polymethacrylic acid ester-based resin particles by subjecting a methacrylic acid ester-based monomer or a mixture of a methacrylic acid ester-based monomer and a copolymerizable monomer to suspension polymerization using a polymerization initiator.

Citation List

[Patent Literature]

[Patent Literature 1]

WO 2016/047490

[Patent Literature 2]

Japanese Patent Application Publication, Tokukai, No. 2015-183111

Summary of Invention

Technical Problem

However, the conventional technique as described above has room for improvement in terms of internal fusibility and production efficiency of a methyl methacrylate-based resin foamed molded product.

In view of the above circumstances, an object of an embodiment of the present invention is to provide expandable methyl methacrylate-based resin particles capable of efficiently providing a methyl methacrylate-based resin foamed molded product which is excellent in internal fusibility.

Solution to Problem

The inventors of the present invention carried out diligent study in order to attain the object. As a result, the inventors of the present invention completed the present invention.

That is, expandable methyl methacrylate-based resin particles in accordance with an embodiment of the present invention contain: a base resin including, as constitutional units, a methyl methacrylate unit and an acrylic ester unit; and a blowing agent, the expandable methyl methacrylate-based resin particles satisfying the following conditions (a) through (c): (a) in a case where the expandable methyl methacrylate-based resin particles are expanded at a steam blowing pressure of 0.10 MPa to 0.16 MPa and at an internal pressure in an expansion machine of 0.005 MPa to 0.030 MPa, a time (A) is less than 810 seconds, the time (A) being a time taken for the expandable methyl methacrylate-based resin particles to become methyl methacrylate-based resin expanded particles having a volume magnification of 60 times; (b) in a case where 100 cm$^3$ of methyl methacrylate-based resin expanded particles obtained by expanding the expandable methyl methacrylate-based resin particles are heated by steam at 100°C for 30 seconds and are then left to stand at 25°C for 1 minute, the methyl methacrylate-based resin expanded particles then have a volume (B) of less

than 140 cm$^3$; and (c) in a case where 100 cm$^3$ of methyl methacrylate-based resin expanded particles obtained by expanding the expandable methyl methacrylate-based resin particles are heated by steam at 100°C for 180 seconds and are then left to stand at 25°C for 1 minute, the methyl methacrylate-based resin expanded particles then have a volume (C) of more than 160 cm$^3$.

In expandable methyl methacrylate-based resin particles in accordance with another embodiment of the present invention: the expandable methyl methacrylate-based resin particles contain a blowing agent and a base resin which includes, as constitutional units, a methyl methacrylate unit and an acrylic ester unit; the expandable methyl methacrylate-based resin particles contain no solvent or contain more than 0.0 parts by weight and not more than 2.0 parts by weight of a solvent relative to 100 parts by weight of the base resin; in the base resin, relative to a total amount of 100 parts by weight of the methyl methacrylate unit and the acrylic ester unit, (a) a contained amount of the methyl methacrylate unit is 95.0 parts by weight to 98.0 parts by weight, and (b) a contained amount of the acrylic ester unit is 2.0 parts by weight to 5.0 parts by weight; and a total amount of the acrylic ester unit and the solvent relative to 100 parts by weight of the base resin is 3.0 parts by weight to 5.0 parts by weight.

A method for producing expandable methyl methacrylate-based resin particles in accordance with an embodiment of the present invention includes a copolymerization step of copolymerizing a monomer mixture containing a methyl methacrylate monomer and an acrylic ester monomer, and a blowing agent impregnation step of impregnating, with a blowing agent, a copolymer which has been obtained, in which: the copolymerization step includes (a) an initiation step of initiating copolymerization of the monomer mixture in the presence of a first poorly water-soluble inorganic salt in an amount of 0.08 parts by weight to 1.20 parts by weight relative to 100 parts by weight of the monomer mixture, and (b) an addition step of adding, to a reaction mixture, a second poorly water-soluble inorganic salt in an amount of 0.08 parts by weight to 0.50 parts by weight relative to 100 parts by weight of the monomer mixture at a point in time when a polymerization conversion rate is 35% to 70% after the initiation step; in the copolymerization step, an amount of the methyl methacrylate monomer to be used is 95.0 parts by weight to 98.0 parts by weight, and an amount of the acrylic ester monomer to be used is 2.0 parts by weight to 5.0 parts by weight, relative to a total amount of 100 parts by weight of the methyl methacrylate monomer and the acrylic ester monomer to be used; and in the copolymerization step and/or the blowing agent impregnation step, (i) no solvent is used, or a solvent is used in an amount of more than 0.0 parts by weight and not more than 2.0 parts by weight, relative to 100 parts by weight of the copolymer, and (ii) a total amount of the acrylic ester monomer and the solvent to be used, relative to 100 parts by weight of the copolymer, is 3.0 parts by weight to 5.0 parts by weight.

Advantageous Effects of Invention

An embodiment of the present invention brings about an effect of enabling provision of expandable methyl methacrylate-based resin particles that are capable of efficiently providing a foamed molded product which is excellent in internal fusibility.

Description of Embodiments

The following description will discuss embodiments of the present invention. The present invention is not, however, limited to these embodiments. The present invention is not limited to the configurations described below, but may be altered in various ways within the scope of the claims. The present invention also encompasses, in its technical scope, any embodiment derived by combining technical means disclosed in differing embodiments or examples. Further, it is possible to form a new technical feature by combining the technical means disclosed in the respective embodiments. All academic and patent literatures cited in the present specification are incorporated herein by reference. Any numerical range expressed as "A to B" herein means "not less than A and not more than B (i.e., a range from A to B which includes both A and B)" unless otherwise stated.

Herein, "expandable methyl methacrylate-based resin particles" may sometimes be expressed as "expandable resin particles", "methyl methacrylate-based resin expanded particles" may sometimes be expressed as "expanded particles", and a "methyl methacrylate-based resin foamed molded product" may sometimes be expressed as a "foamed molded product".

[1. Technical idea of an embodiment of the present invention]

A methyl methacrylate-based resin foamed molded product which is inferior in terms of internal fusibility is inferior in processability. For example, when the methyl methacrylate-based resin foamed molded product is cut, methyl methacrylate-based resin expanded particles fall off from a cut surface of the methyl methacrylate-based resin foamed molded product.

As a result of study by the inventors of the present invention, a foamed molded product obtained by using expandable resin particles disclosed in Patent Literatures 1 and 2 has some room for improvements in terms of internal fusibility.

In view of the above described circumstances, the inventors of the present invention have diligently studied in order to provide expandable methyl methacrylate-based resin particles capable of efficiently providing a methyl methacrylate-based resin foamed molded product which is excellent in internal fusibility.

The inventors of the present invention have found the following features as a result of the diligent study, and accomplished the present invention. (a) Expandable methyl methacrylate-based resin particles having an excellent expansion rate (expandability) can efficiently provide methyl methacrylate-based resin expanded particles, and (b) methyl methacrylate-based resin expanded particles which have a low expansion rate and less shrink after being heated can provide a methyl methacrylate-based resin foamed molded product that is excellent in internal fusibility.

[2. Expandable methyl methacrylate-based resin particles]

The expandable methyl methacrylate-based resin particles in accordance with an embodiment of the present invention contain: a base resin including, as constitutional units, a methyl methacrylate unit and an acrylic ester unit; and a blowing agent, the expandable methyl methacrylate-based resin particles satisfying the following conditions (a) through (c):

(a) in a case where the expandable methyl methacrylate-based resin particles are expanded at a steam blowing pressure of 0.10 MPa to 0.16 MPa and at an internal pressure in an expansion machine of 0.005 MPa to 0.030 MPa, a time (A) is less than 810 seconds, the time (A) being a time taken for the expandable methyl methacrylate-based resin particles to become methyl methacrylate-based resin expanded particles having a volume magnification of 60 times;

(b) in a case where 100 $cm^3$ of methyl methacrylate-based resin expanded particles obtained by expanding the expandable methyl methacrylate-based resin particles are heated by steam at 100°C for 30 seconds and are then left to stand at 25°C for 1 minute, the methyl methacrylate-based resin expanded particles then have a volume (B) of less than 140 $cm^3$; and

(c) in a case where 100 $cm^3$ of methyl methacrylate-based resin expanded particles obtained by expanding the expandable methyl methacrylate-based resin particles are heated by steam at 100°C for 180 seconds and are then left to stand at 25°C for 1 minute, the methyl methacrylate-based resin expanded particles then have a volume (C) of more than 160 $cm^3$.

"Expandable methyl methacrylate-based resin particles in accordance with an embodiment of the present invention" may be hereinafter referred to as "the present expandable resin particles".

It is possible to provide expanded particles by using a known method to expand the present expandable resin particles. It is possible to provide a foamed molded product by using a known method to carry out in-mold molding with respect to expanded particles produced by expanding the present expandable resin particles.

Since the present expandable resin particles have the above described configuration, it is advantageously possible to efficiently provide a foamed molded product that is excellent in internal fusibility.

The present expandable resin particles have the time (A) of less than 810 seconds. The time (A) can be said to be a time (heating time) taken for providing, from the expandable resin particles, expanded particles having a volume magnification of 60 times. A shorter time (A) means that the expansion rate of the expandable resin particles is faster, and means that the expandability of the expandable resin particles is better. The expandable resin particles having excellent expandability can reduce a production time and a production cost when the expandable resin particles are used to produce expanded particles. Therefore, the present expandable resin particles are advantageously capable of efficiently providing expanded particles, and consequently efficiently providing a foamed molded product.

In the present expandable resin particles, the volume (B) of expanded particles obtained by expanding the expandable resin particles is less than 140 $cm^3$. The volume (B) indicates a degree of expanding of the expanded particles within a certain period of time, and may reflect the expansion rate of the expanded particles. A smaller volume (B) means that the expansion rate of the expanded particles is slower, and means that the expandability of the expanded particles is lower. The expanded particles having lower expandability allow, in in-mold molding using the expanded particles, steam to sufficiently spread to expanded particles at the center part inside a mold. Thus, it is possible to provide a foamed molded product that is excellent in internal fusibility. Therefore, the present expandable resin particles are advantageously capable of providing a foamed molded product that is excellent in internal fusibility.

In the present expandable resin particles, the volume (C) of expanded particles obtained by expanding the expandable resin particles is more than 160 $cm^3$. The volume (C) indicates a degree of shrinkage of the expanded particles after being heated. A larger volume (C) means that the expanded particles are less likely to shrink after being heated, and means that the expanded particles have excellent shrinkage inhibitive property. The expanded particles having excellent shrinkage inhibitive property tend to maintain adhesion (fusion) between expanded particles inside a foamed molded product in in-mold molding using the expanded particles or in the foamed molded product obtained by in-mold molding. Consequently, it is possible to provide a foamed molded product that is excellent in internal fusibility. Therefore, the present expandable resin particles are advantageously capable of providing a foamed molded product that is excellent in internal fusibility.

The expansion of the expandable resin particles can also be called "primary expansion". Therefore, the expansion rate and expandability of the expandable resin particles can be said to be an expansion rate and expandability of the primary expansion, respectively. Meanwhile, the expansion of the expanded particles can also be called "secondary expansion". Therefore, the expansion rate and expandability of the expanded particles can be said to be an expansion rate and expandability of the secondary expansion, respectively.

(Base resin)

A base resin included in the present expandable resin particles includes, as constitutional units, a methyl methacrylate unit, and an acrylic ester unit. Herein, the "methyl methacrylate unit" refers to a constitutional unit derived from a methyl methacrylate monomer, and the "acrylic ester unit" refers to a constitutional unit derived from an acrylic ester monomer. The expression "monomer" may occasionally be omitted herein. Thus, for example, the simple expressions "methyl methacrylate" and "acrylic ester" herein mean the "methyl methacrylate monomer" and the "acrylic ester monomer", respectively.

In the base resin contained in the present expandable resin particles, relative to the total amount of 100 parts by weight of the methyl methacrylate unit and the acrylic ester unit, (a) a contained amount of the methyl methacrylate unit is preferably 95.0 parts by weight to 98.0 parts by weight, and a contained amount of the acrylic ester unit is preferably 2.0 parts by weight to 5.0 parts by weight, (b) a contained amount of the methyl methacrylate unit is more preferably 95.5 parts by weight to 97.5 parts by weight, and a contained amount of the acrylic ester unit is more preferably 2.5 parts by weight to 4.5 parts by weight, (c) a contained amount of the methyl methacrylate unit is further preferably 96.0 parts by weight to 97.0 parts by weight, and a contained amount of the acrylic ester unit is further preferably 3.0 parts by weight to 4.0 parts by weight. In the base resin, in a case where the contained amount of the methyl methacrylate unit is not more than 98.0 parts by weight relative to the total amount of 100 parts by weight of the methyl methacrylate unit and the acrylic ester unit, the expandable resin particles tend to have excellent expandability. In the base resin, in a case where the contained amount of the acrylic ester unit is not more than 5.0 parts by weight relative to the total amount of 100 parts by weight of the methyl methacrylate unit and the acrylic ester unit, expanded particles obtained by expanding the expandable resin particles tend to have excellent shrinkage inhibitive property.

Examples of the acrylic ester in accordance with an embodiment of the present invention encompass methyl acrylate, ethyl acrylate, propyl acrylate, and butyl acrylate. The acrylic ester is particularly preferably butyl acrylate.

In other words, the acrylic ester unit is particularly preferably a butyl acrylate unit derived from a butyl acrylate monomer. Butyl acrylate provides a great effect of reducing a glass transition temperature of the base resin. Therefore, according to the configuration, it is possible to provide expandable resin particles which are excellent in expandability and moldability (e.g., shrinkage inhibitive property).

The base resin of the present expandable resin particles may contain a constitutional unit derived from a crosslinking agent (hereinafter also referred to as "crosslinking agent unit"). In a case where the base resin of the present expandable resin particles contains the constitutional unit derived from a crosslinking agent, there are advantages that (a) expandable resin particles are excellent in expandability, (b) expanded particles obtained by expanding the expandable resin particles have low expandability and are excellent in shrinkage inhibitive property, and (c) a foamed molded product obtained by in-mold molding of the expanded particles is excellent in internal fusibility and generates a small amount of residue after burning. In addition, expandable resin particles containing the base resin containing the constitutional unit derived from a crosslinking agent as a constitutional unit have an advantage that a molecular weight can be easily adjusted in the production process.

Examples of the crosslinking agent encompass compounds each having two or more functional groups exhibiting radical reactivity. Among the compounds each having two or more functional groups exhibiting radical reactivity, a bifunctional monomer having two functional groups is preferably used as the crosslinking agent. In other words, the base resin of the present expandable resin particles preferably includes, as the constitutional unit derived from the crosslinking agent, a bifunctional monomer unit, which is a constitutional unit derived from a bifunctional monomer. According to the configuration, there are advantages that (a) expandable resin particles are further excellent in expandability, (b) expanded particles obtained by expanding the expandable resin particles have lower expandability and are further excellent in shrinkage inhibitive property, and (c) a foamed molded product obtained by in-mold molding of the expanded particles is further excellent in internal fusibility and generates a smaller amount of residue after burning.

Examples of the bifunctional monomer encompass (a)(a-1) compounds prepared by esterifying, with acrylic acids or methacrylic acids, hydroxyl groups at both terminals of ethylene glycol such as ethylene glycol di(meth)acrylate, diethylene glycol di(meth)acrylate, or triethylene glycol di(meth)acrylate or of an oligomer of the ethylene glycol, (b) compounds prepared by esterifying, with an acrylic acid or a methacrylic acid, a hydroxyl group of dihydric alcohol such as neopentyl glycol di(meth)acrylate, hexanediol di(meth)acrylate (e.g., 1,6-hexanediol diacrylate), or butanediol di(meth)acrylate, and (c) an aryl compound having two alkenyl groups such as divinylbenzene. The bifunctional monomer is preferably hexanediol di(meth)acrylate, since this facilitates adjustment of the molecular weight. The term "(meth)acrylate" herein means "acrylate and/or methacrylate". For example, hexanediol di(meth)acrylate means hexanediol diacrylate and/or hexanediol dimethacrylate.

In a case where the base resin contains the constitutional unit derived from a crosslinking agent, a contained amount of the crosslinking agent unit (e.g., a bifunctional monomer unit) in the present expandable resin particles is preferably not less than 0.05 parts by weight and not more than 0.15 parts by weight, and more preferably not less than 0.08 parts by weight and 0.13 parts by weight, relative to the total contained amount of 100 parts by weight of the methyl methacrylate unit and the acrylic ester unit. According to the configuration, there are advantages that (a) expandable resin particles are further excellent in expandability, (b) expanded particles obtained by expanding the expandable resin particles have lower expandability and are further excellent in shrinkage inhibitive property, and (c) a foamed molded product obtained by in-mold molding of the expanded particles is further excellent in strength and internal fusibility and generates a smaller amount of residue after burning.

The base resin of the present expandable resin particles may or may not contain a constitutional unit derived from an aromatic monomer (hereinafter also referred to as "aromatic unit") as a constitutional unit. Examples of the aromatic monomer include aromatic vinyl compounds such as styrene, $\alpha$-methylstyrene, paramethylstyrene, t-butylstyrene, and chlorostyrene. In a case where the base resin of the present expandable resin particles includes the aromatic unit, it is possible to obtain a foamed molded product having excellent strength.


(Blowing agent)

The blowing agent contained in the present expandable resin particles is not particularly limited. Examples of the blowing agent encompass (a) aliphatic hydrocarbons that are hydrocarbons having 3 to 5 carbon atoms, such as propane, isobutane, normal butane, isopentane, normal pentane, and neopentane and (b) volatile blowing agents such as hydrofluorocarbons having zero ozone depletion potential, e.g., difluoroethane and tetrafluoroethane. It is permissible that these blowing agents may be used alone or in combination of two or more thereof.

The present expandable resin particles contain the blowing agent in an amount of preferably 5 parts by weight to 12 parts by weight, and more preferably 7 parts by weight to 10 parts by weight, relative to 100 parts by weight of the base resin. This configuration brings about an advantage of (i) being capable of providing expandable resin particles having sufficient expandability and (ii) eliminating the need for massive polymerization equipment.


(Solvent)

The present expandable resin particles may or may not contain a solvent. The present expandable resin particles preferably further contain a solvent. In a case where the present expandable resin particles contain a solvent, there are advantages that (a) expandable resin particles are excellent in expandability, and (b) expanded particles obtained by expanding the expandable resin particles have low expandability and are excellent in shrinkage inhibitive property. That is, in a case where the present expandable resin particles contain a solvent, the expandable resin particles are advantageously capable of efficiently providing a foamed molded product that is excellent in internal fusibility.

Examples of the solvent include, but are not particularly limited to, (a) aliphatic hydrocarbons having 6 or more carbon atoms ($C_6$ or more) such as hexane and heptane, (b) $C_6$ or more alicyclic hydrocarbons such as cyclohexane and cyclooctane, and (c) aromatic compounds such as xylene and toluene. As the solvent, one kind selected from the group consisting of the above described compounds may be used alone, or two or more kinds thereof may be used in combination. In order to obtain expandable resin particles excellent in expandability, the present expandable resin particles preferably contain a solvent having a boiling point of 50°C to 108°C as a solvent, and more preferably contain cyclohexane as a solvent.

The present expandable resin particles preferably contain no solvent, or contain a solvent in an amount of more than 0.0 parts by weight and not more than 2.0 parts by weight relative to 100 parts by weight of the base resin. In the present expandable resin particles, relative to 100 parts by weight of the base resin, a contained amount of a solvent is preferably not more than 2.0 parts by weight, more preferably not more than 1.9 parts by weight, more preferably not more than 1.8 parts by weight, more preferably not more than 1.7 parts by weight, more preferably not more than 1.6 parts by weight, more preferably not more than 1.5 parts by weight, more preferably not more than 1.4 parts by weight, more preferably not more than 1.3 parts by weight, more preferably not more than 1.2 parts by weight, more preferably not more than 1.1 parts by weight, more preferably not more than 1.0 part by weight, more preferably not more than 0.9 parts by weight, more preferably not more than 0.8 parts by weight, more preferably not more than 0.7 parts by weight, further preferably not more than 0.6 parts by weight, and particularly preferably not more than 0.5 parts by weight. In the present expandable resin particles, relative to 100 parts by weight of the base resin, a contained amount of the solvent is preferably more than 0.0 parts by weight, more preferably not less than 0.1 parts by weight, more preferably not less than 0.2 parts by weight, more preferably not less than 0.3 parts by weight, further preferably not less than 0.4 parts by weight, and particularly preferably not less than 0.5 parts by weight. According to the configuration, there are advantages that (a) expandable resin particles are further excellent in expandability, and (b) expanded particles obtained by expanding the expandable resin particles have lower expandability and are further excellent in shrinkage inhibitive property.

In the present expandable resin particles, the total amount of the acrylic ester unit and the solvent relative to 100 parts by weight of the base resin is preferably 3.0 parts by weight to 5.0 parts by weight, more preferably 3.1 parts by weight to 4.9 parts by weight, more preferably 3.2 parts by weight to 4.8 parts by weight, more preferably 3.3 parts by weight to 4.7 parts by weight, more preferably 3.4 parts by weight to 4.6 parts by weight, more preferably 3.5 parts by weight to 4.5 parts by weight, further preferably 3.6 parts by weight to 4.4 parts by weight, further more preferably 3.7 parts by weight to 4.3 parts by weight, and particularly preferably 3.8 parts by weight to 4.2 parts by weight. According to the configuration, there are advantages that (a) expandable resin particles are further excellent in expandability, and (b) expanded particles obtained by expanding the expandable resin particles have lower expandability and are further excellent in shrinkage inhibitive property.

(Other additive(s))

The present expandable resin particles may optionally further contain other additive(s) in addition to the base resin, the blowing agent, and the optionally contained solvent. Examples of the other additive(s) include a crosslinking agent, a cell adjusting agent, a plasticizer, a flame retardant, an auxiliary flame retarder, a heat radiation inhibitor, a pigment, a colorant, and an antistatic agent.

(Cell adjusting agent)

Examples of the cell adjusting agent encompass (a) aliphatic bisamides such as methylene-bis-stearic acid amide and ethylene-bis-stearic acid amide and (b) polyethylene wax. A contained amount of the cell adjusting agent is preferably 0.01 parts by weight to 0.50 parts by weight, relative to 100 parts by weight of the base resin.

(Aromatic monomer and aromatic compound)

From the viewpoint of obtaining a foamed molded product with a small amount of residue after burning, it is preferable that the present expandable resin particles contain an aromatic monomer and an aromatic compound, or an aromatic monomer and a structure derived from an aromatic compound (e.g., an aromatic ring) in an amount which is as small as possible. Specifically, in the present expandable resin particles, (a) it is preferable that an amount of a constitutional unit derived from the aromatic monomer contained in the base resin is as small as possible, and (b) an amount of an aromatic compound (e.g., toluene and xylene) contained as, for example, a solvent is as small as possible.

It is preferable that (i) the base resin contains no constitutional unit derived from an aromatic monomer or contains more than 0.0 parts by weight and not more than 2.5 parts by weight of a constitutional unit derived from an aromatic monomer, relative to 100 parts by weight of the base resin. In the base resin, a contained amount of a constitutional unit derived from an aromatic monomer relative to 100 parts by weight of the base resin is preferably not more than 2.5 parts by weight, more preferably less than 2.5 parts by weight, more preferably not more than 2.0 parts by weight, more preferably not more than 1.5 parts by weight, further preferably not more than 1.0 part by weight, further more preferably less than 1.0 part by weight, particularly preferably less than 0.5 parts by weight, and most preferably 0 parts by weight. That is, the base resin of the present expandable resin particles most preferably does not contain the constitutional unit derived from the aromatic monomer.

It is preferable that the expandable methyl methacrylate-based resin particles contain no aromatic compound or contain more than 0.0 parts by weight and not more than 2.5 parts by weight of an aromatic compound, relative to 100 parts by weight of the base resin. In the present expandable resin particles, a contained amount of an aromatic compound relative to 100 parts by weight of the base resin is preferably not more than 2.5 parts by weight, more preferably less than 2.5 parts by weight, more preferably not more than 2.0 parts by weight, more preferably not more than 1.5 parts by weight, further preferably not more than 1.0 part by weight, further more preferably less than 1.0 part by weight, particularly preferably less than 0.5 parts by weight, and most preferably 0 parts by weight. That is, it is most preferable that the present expandable resin particles do not contain an aromatic compound. More specifically, in the present expandable resin particles, a total contained amount of toluene and xylene relative to 100 parts by weight of the base resin is preferably not more than 2.5 parts by weight, more preferably less than 2.5 parts by weight, more preferably not more than 2.0 parts by weight, more preferably not more than 1.5 parts by weight, further preferably not more than 1.0 part by weight, further more preferably less than 1.0 part by weight, particularly preferably less than 0.5 parts by weight, and most preferably 0 parts by weight. That is, it is most preferable that the present expandable resin particles do not contain toluene and xylene.

(Volume-average particle size)

A volume-average particle size of the present expandable resin particles is preferably 0.5 mm to 1.4 mm, more preferably 0.6 mm to 1.2 mm, more preferably more than 0.6 mm and 1.0 mm or less, and further preferably 0.7 mm to 0.9 mm. In a case where the volume-average particle size is 0.5 mm or more, expandable resin particles are unlikely to cause a decrease in expandability and/or an increase in blocking during expansion. In a case where the volume-average particle size is 1.4 mm or less, expandability of expanded particles obtained by expanding the expandable resin particles is unlikely to become too high. In addition, a surface of a molded product is formed slowly during molding using the expanded particles, and thus steam enters the inside of a foamed molded product. As a result, fusibility of the inside of the foamed molded product is improved. The volume-average particle size of expandable resin particles is herein defined as a particle diameter corresponding to a volume accumulation of 50%, the particle diameter being obtained by using a particle size analyzer (e.g., an image-processing-type Millitrack JPA particle size analyzer) to measure a particle diameter of expandable resin particles in terms of their volume and represent an obtained result by a cumulative distribution.

The expandable methyl methacrylate-based resin particles may be sieved to collect expandable methyl methacrylate-based resin particles having a particle diameter of 0.5 mm to 1.4 mm. In this case, a volume-average particle size of the collected expandable methyl methacrylate-based resin particles is in a range of 0.5 mm to 1.4 mm.

(Weight average molecular weight)

The present expandable resin particles preferably have a weight average molecular weight in terms of polystyrene measured by gel permeation chromatography (GPC) of 100,000 to 400,000. With this configuration, expandable resin particles can provide a foamed molded product that has excellent internal fusibility.

(Expandability of expandable methyl methacrylate-based resin particles)

The present expandable resin particles have the time (A) of less than 810 seconds and are excellent in expandability. In order that the expandable resin particles have more excellent expandability, the time (A) is preferably 805 seconds or less, more preferably less than 805 seconds, more preferably 800 seconds or less, more preferably less than 800 seconds, more preferably 780 seconds or less, more preferably 760 seconds or less, more preferably 740 seconds or less, more preferably 720 seconds or less, more preferably 710 seconds or less, more preferably 700 seconds or less, more preferably 680 seconds or less, more preferably 660 seconds or less, more preferably 640 seconds or less, more preferably 620 seconds or less, more preferably 600 seconds or less, more preferably 580 seconds or less, more preferably 560 seconds or less, more preferably 540 seconds or less, further preferably 520 seconds or less, and particularly preferably 500 seconds or less. The time (A) is preferably as short as possible, and a lower limit thereof is not particularly limited, provided that the time (A) exceeds at least 0 seconds.

Here, a method of measuring the time (A) (expansion rate) of the expandable resin particles is not particularly limited, and examples thereof include a method of sequentially carrying out the following procedures (1) through (4): (1) expandable resin particles are introduced into a pressurization type expansion machine (e.g., BHP available from Obiraki Industry Co., Ltd.); (2) next, steam (e.g., water vapor) is blown into the expansion machine at a steam blowing pressure of 0.10 MPa to 0.16 MPa and at an internal pressure in the expansion machine of 0.005 MPa to 0.030 MPa, and the expandable resin particles are heated; (3) at regular intervals, expanded particles obtained by expanding the expandable resin particles are taken out from the expansion machine, and a volume magnification of the expanded particles is measured; (4) the time (A) (which can be also called "heating time (A)") from when the steam is blown with respect to the expandable resin particles to when expanded particles having a volume magnification of 60 times are obtained is measured.

In a case where the expandable resin particles are heated at a steam blowing pressure of 0.16 MPa, the time taken to obtain expanded particles having a volume magnification of 60 times is slightly shorter but is substantially unchanged, as compared with a case where the expandable resin particles are heated at a steam blowing pressure of 0.10 MPa. In this specification, the time (A) is defined as a time taken to obtain expanded particles having a volume magnification of 60 times in a case where the expandable resin particles are heated at a steam blowing pressure of 0.10 MPa to 0.16 MPa and at an internal pressure in the expansion machine of 0.005 MPa to 0.030 MPa. Expandable resin particles used to measure the time (A) may be expandable resin particles sieved to have a particle diameter of 0.5 mm to 1.4 mm.

In this specification, the volume magnification of the expanded particles is obtained by sequentially carrying out the following procedures (1) through (3): (1) 10 g of expanded particles are weighed and introduced into a 1000 cm$^3$ graduated cylinder; (2) a volume of 10 g of the expanded particles is measured from the graduation of the graduated cylinder; and (3) a volume magnification of the expanded particles is calculated by the following formula.

$$\text{Volume magnification (cm}^3/\text{g)} = \text{volume of expanded particles (cm}^3)/10 \text{ g}$$

In this specification, the volume magnification of the expanded particles can also be referred to as "expanding ratio". A unit of the volume magnification is actually cm$^3$/g based on the above formula. Note, however, that the unit of the volume magnification is herein expressed as "time(s)" for convenience.

The expanded particles obtained by expanding the present expandable resin particles have the volume (B) of less than 140 cm$^3$, and thus have lower expandability. In order to provide a foamed molded product having more excellent internal fusibility, the volume (B) is preferably 138 cm$^3$ or less, more preferably 136 cm$^3$ or less, more preferably 135 cm$^3$ or less, more preferably 134 cm$^3$ or less, more preferably 132 cm$^3$ or less, more preferably 130 cm$^3$ or less, more preferably 128 cm$^3$ or less, more preferably 126 cm$^3$ or less, further preferably 124 cm$^3$ or less, and particularly preferably 122 cm$^3$ or less. The volume (B) is preferably as small as possible, and a lower limit thereof is not particularly limited, provided that the volume (B) exceeds at least 100 cm$^3$.

Here, a method of measuring the volume (B) of the expanded particles obtained by expanding the present expandable resin particles is not particularly limited, and examples thereof include a method of sequentially carrying out the following procedures (1) through (6): (1) the present expandable resin particles are expanded at a volume magnification of 60 times to prepare expanded particles having a volume magnification of 60 times; (2) 100 cm$^3$ of the expanded particles are weighed and introduced into a steamer (e.g., a steamer having a blow-out port); (3) steam at 100°C is fed to the steamer and the expanded particles are heated for 30 seconds; (4) after the heating, the expanded particles are taken out from the steamer and left to stand at 25°C for 1 minute; (5) the expanded particles are introduced into a 1000 cm$^3$ graduated cylinder; and (6) a volume (B) of the expanded particles is measured from the graduation of the graduated cylinder.

The expanded particles obtained by expanding the present expandable resin particles have the volume (C) of more than 160 cm$^3$ and are thus excellent in shrinkage inhibitive property. In order to obtain a foamed molded product having more excellent internal fusibility, the volume (C) is preferably 162 cm$^3$ or more, more preferably 164 cm$^3$ or more, more preferably more than 165 cm$^3$, more preferably 166 cm$^3$ or more, more preferably 168 cm$^3$ or more, more preferably 170 cm$^3$ or more, more preferably 172 cm$^3$ or more, further preferably 174 cm$^3$ or more, and particularly preferably 176 cm$^3$ or more.

Here, a method of measuring the volume (C) of the expanded particles obtained by expanding the present expandable resin particles is not particularly limited, and examples thereof include a method of sequentially carrying out the following procedures (1) through (6): (1) the present expandable resin particles are expanded at a volume magnification of 60 times to prepare expanded particles having a volume magnification of 60 times; (2) 100 cm$^3$ of the expanded particles are weighed and introduced into a steamer (e.g., a steamer having a blow-out port); (3) steam at 100°C is fed to the steamer and the expanded particles are heated for 180 seconds; (4) after the heating, the expanded particles are taken out from the steamer and left to stand at 25°C for 1 minute; (5) the expanded particles are introduced into a 1000 cm$^3$ graduated cylinder; and (6) a volume (C) of the expanded particles is measured from the graduation of the graduated cylinder.

A method for producing expanded particles having a volume magnification of 60 times that are used to measure the volume (B) and the volume (C) is not particularly limited, and examples thereof include a method in which the following procedures (1) through (3) are sequentially carried out: (1) expandable resin particles are introduced into a pressurization type expansion machine (e.g., BHP available from Obiraki Industry Co., Ltd.); (2) steam (e.g., water vapor) is blown into the expansion machine at a steam blowing pressure of 0.10 MPa to 0.16 MPa and at an internal pressure in the expansion machine of 0.005 MPa to 0.030 MPa, and the expandable resin particles are heated; and (3) by the above procedure (2), the expandable resin particles are expanded up to a desired expanding ratio (e.g., a volume magnification of 60 times), and thus expanded particles are obtained. Note that expandable resin particles used to produce expanded particles having a volume magnification of 60 times that are used to measure the volume (B) and the volume (C) may be expandable resin particles sieved to have a particle diameter of 0.5 mm to 1.4 mm.

(Variation 1)

In the course of diligent studies aimed at providing expandable methyl methacrylate-based resin particles that can efficiently provide a methyl methacrylate-based resin foamed molded product that is excellent in internal fusibility, the inventors of the present invention also found the following matters by themselves: (i) as a contained amount of a solvent and/or a total amount of an acrylic ester unit and the solvent is increased in expandable resin particles, an expansion rate of the expandable resin particles is increased, that is, expandability is excellent, and consequently expanded particles and a foamed molded product can be efficiently provided; (ii) in contrast, in a case where a contained amount of a solvent and/or a total amount of an acrylic ester unit and the solvent is excessively large (i.e., exceeds a certain value) in the expandable resin particles, an expansion rate of expanded particles obtained by expanding the expandable resin particles increases and shrinkage of the expanded particles after being heated increases, and consequently a foamed molded product provided by the expanded particles has lower internal fusibility; (iii) as a contained amount of a solvent and/or a total amount of an acrylic ester unit and the solvent decreases in the expandable resin particles, an expansion rate of expanded particles obtained by expanding the expandable resin particles decreases and shrinkage of the expanded particles after being heated is reduced, and consequently it is possible to provide a foamed molded product having excellent internal fusibility; and (iv) in contrast, in a case where a contained amount of a solvent and/or a total amount of an acrylic ester unit and the solvent is excessively small (i.e., falls below a certain value) in expandable resin particles, an expansion rate of the expandable resin particles decreases, that is, expandability is lower, and consequently expanded particles and a foamed molded product cannot be efficiently provided.

As a result of further diligent studies based on such novel findings, the inventors of the present invention have found the following matters and accomplished another embodiment of the present invention: by setting a contained amount of a solvent and/or a total amount of an acrylic ester unit and the solvent in expandable resin particles to be within specific ranges, it is possible to provide expandable resin particles that can efficiently provide a foamed molded product that is excellent in internal fusibility; and specifically, by setting a contained amount of a solvent and/or a total amount of an acrylic ester unit and the solvent in expandable resin particles to be within specific ranges, it is possible to provide expandable resin particles having the following features: (a) the expandable resin particles have excellent expandability, (b) an expansion rate of expanded particles obtained by expanding the expandable resin particles is low, and (c) the expanded particles are less shrunk after being heated.

That is, expandable methyl methacrylate-based resin particles in accordance with another embodiment of the present invention have the following features. Expandable methyl methacrylate-based resin particles, in which: the expandable methyl methacrylate-based resin particles contain a blowing agent and a base resin which includes, as constitutional units, a methyl methacrylate unit and an acrylic ester unit; the expandable methyl methacrylate-based resin particles contain no solvent or contain more than 0.0 parts by weight and not more than 2.0 parts by weight of a solvent relative to 100 parts by weight of the base resin; in the base resin, relative to a total amount of 100 parts by weight of the methyl methacrylate unit and the acrylic ester unit, (a) a contained amount of the methyl methacrylate unit is 95.0 parts by weight to 98.0 parts by weight, and (b) a contained amount of the acrylic ester unit is 2.0 parts by weight to 5.0 parts by weight; and a total amount of the acrylic ester unit and the solvent relative to 100 parts by weight of the base resin is 3.0 parts by weight to 5.0 parts by weight.

The expandable methyl methacrylate-based resin particles in accordance with another embodiment of the present invention have the above described features, and therefore can advantageously (a) have excellent expandability and (b) provide expanded particles having low expandability and excellent shrinkage inhibitive property. That is, the expandable resin particles having the above described features are advantageously capable of efficiently providing a foamed molded product that is excellent in internal fusibility.

For other aspects of the expandable methyl methacrylate-based resin particles in accordance with another embodiment of the present invention, the foregoing descriptions apply as appropriate.

(Variation 2)

The present expandable resin particles can provide a foamed molded product that has excellent internal fusibility. The internal fusibility of the foamed molded product can be evaluated based on a proportion of expanded particles that are fractured at portions other than interfaces between the expanded particles in a fracture surface obtained by fracturing the foamed molded product. For example, in a fracture surface of a foamed molded product obtained by fracturing the foamed molded product obtained by molding expanded particles obtained by expanding the present expandable resin particles, it can be said that the foamed molded product is excellent in internal fusibility provided that the ratio (D) of expanded particles fractured at portions other than the interfaces between the expanded particles is 80% or more.

That is, expandable methyl methacrylate-based resin particles in accordance with another embodiment of the present invention have the following features. Expandable methyl methacrylate-based resin particles containing: a base resin including, as constitutional units, a methyl methacrylate unit and an acrylic ester unit; and a blowing agent, the expandable methyl methacrylate-based resin particles satisfying the following conditions (a) through (d):

(a) in a case where the expandable methyl methacrylate-based resin particles are expanded at a steam blowing pressure of 0.10 MPa to 0.16 MPa and at an internal pressure in an expansion machine of 0.005 MPa to 0.030 MPa, a time (A) is less than 810 seconds, the time (A) being a time taken for the expandable methyl methacrylate-based resin particles to become methyl methacrylate-based resin expanded particles having a volume magnification of 60 times;

(b) in a case where 100 cm$^3$ of methyl methacrylate-based resin expanded particles obtained by expanding the expandable methyl methacrylate-based resin particles are heated by steam at 100°C for 30 seconds and are then left to stand at 25°C for 1 minute, the methyl methacrylate-based resin expanded particles then have a volume (B) of less than 140 cm$^3$;

(c) in a case where 100 cm$^3$ of methyl methacrylate-based resin expanded particles obtained by expanding the expandable methyl methacrylate-based resin particles are heated by steam at 100°C for 180 seconds and are then left to stand at 25°C for 1 minute, the methyl methacrylate-based resin expanded particles then have a volume (C) of more than 160 cm$^3$; and

(d) in a fracture surface of a methyl methacrylate-based resin foamed molded product obtained by fracturing the methyl methacrylate-based resin foamed molded product that is obtained by molding methyl methacrylate-based resin expanded particles which are obtained by expanding the expandable methyl methacrylate-based resin particles, a ratio (D) of methyl methacrylate-based resin expanded particles fractured at portions other than interfaces between the methyl methacrylate-based resin expanded particles is 80% or more.

Here, a method of measuring the ratio (D) in the fracture surface of the foamed molded product obtained by in-mold molding of the expanded particles obtained by expanding the present expandable resin particles is not particularly limited, and examples thereof include a method of sequentially carrying out the following procedures (1) through (4): (1) expanded particles obtained by expanding the expandable resin particles are subjected to in-mold molding using a mold (e.g., a mold having a molding space having a length of 2000 mm, a width of 1000 mm, and a thickness of 525 mm) to prepare a foamed molded product; (2) the foamed molded product is cut perpendicularly to the thickness direction of the foamed molded product using a hot-wire slicer so that the foamed molded product is evenly divided into five parts in the thickness direction; (3) a plane perpendicular to the thickness direction of the middle one of the five divided parts (i.e., a part between 210 mm and 315 mm in the thickness direction of the foamed molded product prior to cutting) is folded along the width direction at the center in the length direction, and thus the foamed molded product is fractured; (4) the obtained fracture surface is visually observed, and all particles constituting the fracture surface and expanded particles that are fractured at portions other than particle-to-particle interfaces are counted, and the ratio (D) is calculated based on the following formula:

$$\text{Ratio (D) (\%)} = \text{the number of particles fractured at portions other than particle-to-particle interfaces in the fracture surface} / \text{the number of particles constituting the fracture surface} \times 100.$$

A method for producing a foamed molded product used to measure the ratio (D) is not particularly limited, and examples thereof include a method in which the following procedures (1) through (8) are sequentially carried out: (1) expandable resin particles are introduced into a pressurization type expansion machine (e.g., BHP available from Obiraki Industry Co., Ltd.); (2) steam (e.g., water vapor) is blown into the expansion machine at a steam blowing pressure of 0.10 MPa to 0.16 MPa and at an internal pressure in the expansion machine of 0.005 MPa to 0.030 MPa, and the expandable resin particles are heated; (3) by the above procedure (2), the expandable resin particles are expanded up to a desired expanding ratio (e.g., a volume magnification of 60 times); (4) the obtained expanded particles are left to stand at normal temperature (e.g., 25°C) for three days to obtain expanded particles having a volume magnification of 60 times; (5) the expanded particles having the volume magnification of 60 times are charged into a molding machine (e.g., PEONY-205DS available from DAISEN) having a mold (e.g., a mold having a molding space having a length of 2000 mm, a width of 1000 mm and a thickness of 525 mm); (6) steam (e.g., water vapor) is blown into the mold at a steam blowing pressure of 0.15 MPa to 0.25 MPa, and in-mold molding is carried out by vacuum-suction-heating at a pressure in the mold of 0.030 Mpa to 0.060 MPa until the foaming pressure becomes 0.070 MPa to 0.080 MPa, and thus the expanded particles are fused together; (7) after the foaming pressure reaches 0.070 MPa to 0.080 MPa, expanded particles are left to stand in the mold at 80°C to 110°C for 1000 seconds, and then a foamed molded product is taken out; and (8) the foamed molded product thus taken out is left to stand at 60°C for three days to obtain a foamed molded product. Note that expandable resin particles used to produce a foamed molded product used to measure the ratio (D) may be expandable resin particles sieved to have a particle diameter of 0.5 mm to 1.4 mm.

The ratio (D) can also be said to be "fusion ratio". In order to achieve more excellent internal fusibility, the ratio (D) is preferably 80% or more, more preferably 82% or more, more preferably 84% or more, more preferably 86% or more, further preferably 88% or more, and particularly preferably 90% or more.

[3. Method for producing expandable methyl methacrylate-based resin particles]

A method for producing the present expandable resin particles is not particularly limited, and may be, for example, suspension polymerization according to which a monomer mixture is polymerized in an aqueous suspension.

A preferable aspect of the method for producing the present expandable resin particles includes, for example, a method as follows. A method for producing expandable methyl methacrylate-based resin particles including a copolymerization step of copolymerizing a monomer mixture containing a methyl methacrylate monomer and an acrylic ester monomer, and a blowing agent impregnation step of impregnating, with a blowing agent, a copolymer which has been obtained, in which: the copolymerization step includes (a) an initiation step of initiating copolymerization of the monomer mixture in the presence of a first poorly water-soluble inorganic salt in an amount of 0.08 parts by weight to 1.20 parts by weight relative to 100 parts by weight of the monomer mixture, and (b) an addition step of adding, to a reaction mixture, a second poorly water-soluble inorganic salt in an amount of 0.08 parts by weight to 0.50 parts by weight relative to 100 parts by weight of the monomer mixture at a point in time when a polymerization conversion rate is 35% to 70% after the initiation step; in the copolymerization step, an amount of the methyl methacrylate monomer to be used is 95.0 parts by weight to 98.0 parts by weight, and an amount of the acrylic ester monomer to be used is 2.0 parts by weight to 5.0 parts by weight, relative to a total amount of 100 parts by weight of the methyl methacrylate monomer and the acrylic ester monomer to be used; and in the copolymerization step and/or the blowing agent impregnation step, (i) no solvent is used, or a solvent is used in an amount of more than 0.0 parts by weight and not more than 2.0 parts by weight, relative to 100 parts by weight of the copolymer, and (ii) a total amount of the acrylic ester monomer and the solvent to be used, relative to 100 parts by weight of the copolymer, is 3.0 parts by weight to 5.0 parts by weight.

The "poorly water-soluble inorganic salt" herein refers to an inorganic salt having a solubility of not more than 0.1 mg/ml in water at 25°C.

A preferable aspect of the above described method for producing the present expandable resin particles is also an embodiment of the present invention. The following description will discuss a preferable aspect of the above described method for producing the present expandable resin particles, that is, a method for producing expandable methyl methacrylate-based resin particles in accordance with an embodiment of the present invention. Note that, except for matters described in detail below, the description in [2. Expandable methyl methacrylate-based resin particles] is cited as appropriate. Hereinafter, a copolymer (which can be also said to be a base resin) obtained in the copolymerization step may simply be referred to as "resin particles". Herein, a "method for producing expandable methyl methacrylate-based resin particles in accordance with an embodiment of the present invention" may be referred to as "the present production method".

The "aqueous suspension" in accordance with an embodiment of the present invention refers to a liquid prepared by dispersing, with a stirrer and/or the like, monomer droplets and/or resin particles in water or an aqueous solution. In the aqueous suspension, (a) a water-soluble surfactant and monomers may be dissolved, or (b) a dispersion agent, a polymerization initiator, a chain transfer agent, a crosslinking agent, a cell adjusting agent, a flame retardant, a solvent, and/or the like, each of which is water-insoluble, may be dispersed together with the monomers.

The weight ratio between the monomers and polymer (the methyl methacrylate-based resin, which may be rephrased as the copolymer) and the water or aqueous solution in the aqueous suspension is preferably 1.0 / 0.6 to 1.0 / 3.0, in terms of the ratio of the resulting methyl methacrylate-based resin with respect to the water or aqueous solution. Note that the "aqueous solution" herein means a solution made of water and a component that is not the methyl methacrylate-based resin.

The copolymerization step in accordance with an embodiment of the present invention includes the initiation step of initiating copolymerization of a monomer mixture in the presence of 0.08 parts by weight to 1.20 parts by weight of a first poorly water-soluble inorganic salt relative to 100 parts by weight of the monomer mixture. The initiation step is, for example, a step of initiating copolymerization of a monomer mixture with use of, for example, an aqueous suspension containing (a) water, (b) a monomer mixture containing a methyl methacrylate monomer and an acrylic ester monomer, (c) a solvent, (d) 0.08 parts by weight to 1.20 parts by weight of a first poorly water-soluble inorganic salt relative to 100 parts by weight of the monomer mixture, and optionally (e) a crosslinking agent, a polymerization initiator, a surfactant, a dispersion agent that is not a poorly water-soluble inorganic salt, a chain transfer agent, a cell adjusting agent, a flame

EP 4 174 121 A1

retardant, and/or the like.

A timing "before the initiation step", i.e., a "timing before a polymerization reaction is initiated" may be herein referred to as an "initial stage of polymerization". The first poorly water-soluble inorganic salt to be blended (added) into the aqueous suspension in the initiation step, and the polymerization initiator to be optionally blended can be said to be a substance (raw material) to be used at the initial stage of polymerization.

In the initiation step, the first poorly water-soluble inorganic salt can function as a dispersion agent. Examples of the first poorly water-soluble inorganic salt to be used in the initiation step, i.e., the initial stage of polymerization encompass tricalcium phosphate, magnesium pyrophosphate, hydroxyapatite, and kaolin.

In addition, in the initiation step in accordance with an embodiment of the present invention, (a) a water-soluble polymer such as polyvinyl alcohol, methylcellulose, polyacrylamide, or polyvinyl pyrrolidone and/or (b) an anionic surfactant such as sodium $\alpha$-olefin sulfonate or sodium dodecylbenzene sulfonate may be used in combination with the first poorly water-soluble inorganic salt.

The first poorly water-soluble inorganic salt to be used in the initiation step in accordance with an embodiment of the present invention is preferably tricalcium phosphate, from the viewpoint of protection of the resin particles and/or monomer droplets. The initiation step is preferably a step of initiating copolymerization of a monomer mixture in the presence of tricalcium phosphate that is the first poorly water-soluble inorganic salt and sodium $\alpha$-olefin sulfonate that is an anionic surfactant, from the viewpoint of dispersion stability of droplets.

The initiation step in accordance with an embodiment of the present invention is preferably a step of initiating copolymerization of a monomer mixture in the presence of preferably 0.08 parts by weight to 1.20 parts by weight, more preferably 0.10 parts by weight to 1.20 parts by weight, more preferably 0.10 parts by weight to 0.70 parts by weight, and even more preferably 0.10 parts by weight to 0.30 parts by weight of the first poorly water-soluble inorganic salt, relative to 100 parts by weight of the monomer mixture. In a case where copolymerization of a monomer mixture in the presence of not less than 0.08 parts by weight of the first poorly water-soluble inorganic salt relative to 100 parts by weight of the monomer mixture is initiated, there is no fear that resulting expandable resin particles might have a too large volume-average particle size. In a case where copolymerization of a monomer mixture in the presence of not more than 1.20 parts by weight of the first poorly water-soluble inorganic salt relative to 100 parts by weight of the monomer mixture is initiated, there is no fear that many fine particles of expandable resin particles might occur. In other words, by initiating copolymerization of a monomer mixture in the presence of the first poorly water-soluble inorganic salt in an amount in the above described range, expandable resin particles having a desired volume-average particle size can be obtained at a high yield.

The following description will discuss a case in which, in the initiation step in accordance with an embodiment of the present invention, a water-soluble polymer and/or an anionic surfactant is/are used in combination with the first poorly water-soluble inorganic salt. In this case, a concentration of the water-soluble polymer and/or the anionic surfactant in the aqueous suspension is preferably 30 ppm to 100 ppm, on the basis of a concentration (1,000,000 ppm) of the monomer mixture.

The copolymerization step preferably includes the addition step of adding, to the reaction mixture, 0.08 parts by weight to 0.50 parts by weight of the second poorly water-soluble inorganic salt relative to 100 parts by weight of the monomer mixture after the initiation step at a point in time when the polymerization conversion rate is 35% to 70%.

A timing "after the initiation step", i.e., a "timing after the polymerization reaction is initiated" may be herein referred to as "during polymerization". In the addition step, the second poorly water-soluble inorganic salt to be added to the reaction mixture can be said to be a substance (raw material) used during polymerization.

In a case where the monomer mixture is polymerized (copolymerized) according to suspension polymerization in the copolymerization step in accordance with an embodiment of the present invention, the reaction mixture in the addition step can also be referred to as an aqueous suspension.

In the addition step in accordance with an embodiment of the present invention, the second poorly water-soluble inorganic salt can function as a dispersion agent. Examples of the second poorly water-soluble inorganic salt to be used in the addition step, i.e., during polymerization encompass the substances already listed as the examples of the first poorly water-soluble inorganic salt. The second poorly water-soluble inorganic salt is preferably one or more kinds selected from the group consisting of tricalcium phosphate, hydroxyapatite, and kaolin, and is more preferably tricalcium phosphate. With this configuration, it is possible to prevent coalescence of the resin particles at the time of and after addition of the dispersion agent, thereby advantageously making it possible to easily yield expandable resin particles having a target (intended) volume-average particle size.

The adding step is preferably a step of adding, to the reaction mixture, the second poorly water-soluble inorganic salt in an amount of preferably 0.08 parts by weight to 0.50 parts by weight, more preferably 0.10 parts by weight to 0.50 parts by weight, more preferably 0.10 parts by weight to 0.40 parts by weight, even more preferably 0.10 parts by weight to 0.30 parts by weight, and particularly preferably 0.10 parts by weight to 0.20 parts by weight, relative to 100 parts by weight of the monomer mixture after the initiation step at a point in time when the polymerization conversion rate is 35% to 70%. In the addition step, in a case where the amount of the second poorly water-soluble inorganic salt added to the

13

reaction mixture is not less than 0.08 parts by weight relative to 100 parts by weight of the monomer mixture, there is no fear that resulting expandable resin particles might have a too large volume-average particle size. In the addition step, in a case where not more than 0.50 parts by weight of the second poorly water-soluble inorganic salt relative to 100 parts by weight of the monomer mixture is added to the reaction mixture, a usage amount of the poorly water-soluble inorganic salt does not excessively increase, and it is therefore possible to reduce production cost. In other words, in a case where the second poorly water-soluble inorganic salt in an amount in the above described range is added to the reaction mixture in the addition step, expandable resin particles having a desired volume-average particle size can be obtained at low production cost.

The addition step is preferably configured such that the second poorly water-soluble inorganic salt is added to the reaction mixture preferably at a point in time when the polymerization conversion rate is 35% to 70%, more preferably at a point in time when the polymerization conversion rate is 35% to 60%, and further preferably at a point in time when the polymerization conversion rate is 40% to 50%. In the addition step, in a case where the second poorly water-soluble inorganic salt is added to the reaction mixture at a point in time when the polymerization conversion rate is 35% or more, there is no fear that resulting expandable resin particles might have a too small volume-average particle size. In the addition step, in a case where the second poorly water-soluble inorganic salt is added to the reaction mixture at a point in time when the polymerization conversion rate is 70% or less, there is no fear that resulting expandable resin particles might have a too large volume-average particle size. In other words, in a case where the second poorly water-soluble inorganic salt is added to the reaction mixture at a point in time when the polymerization conversion rate is within the above described range in the addition step, expandable resin particles having a desired volume-average particle size can be easily obtained. A method in which the polymerization conversion rate is measured herein will be specifically described in Examples below.

The copolymerization step in accordance with an embodiment of the present invention is preferably carried out at two or more stages while changing a polymerization temperature. For convenience, two copolymerization steps that differ in polymerization temperature are hereinafter referred to as a first copolymerization step and a second copolymerization step. It can also be said that the copolymerization step preferably includes the first copolymerization step and the second copolymerization step that differ in polymerization temperature and that are continuous.

The copolymerization step in accordance with an embodiment of the present invention preferably includes, for example, (a) the first copolymerization step that is carried out at a polymerization temperature of 70°C to 90°C and with use of a low temperature decomposition type polymerization initiator and (b) the second copolymerization step that is carried out successively to the first copolymerization step and that is carried out at a higher polymerization temperature (e.g., 90°C to 110°C) than in the first copolymerization step and with use of a high temperature decomposition type polymerization initiator. In the copolymerization step, it is preferable that a major polymerization reaction takes place in the above described first copolymerization step and that a remaining monomer is reduced in the above described second copolymerization step. Note that (i) the temperature of the first copolymerization step may be 70°C or more and less than 90°C, and the temperature of the second copolymerization step may be 90°C to 110°C, and (ii) the temperature of the first copolymerization step may be 70°C to 90°C, and the temperature of the second copolymerization step may be more than 90°C and 110°C or less.

As the polymerization initiator, a radical generating polymerization initiator generally used to produce a thermoplastic polymer can be used. Examples of a typical radical generating polymerization initiator encompass (a) organic peroxides such as benzoyl peroxide, lauroyl peroxide, t-butyl peroxybenzoate, isopropyl-t-butyl peroxycarbonate, butyl perbenzoate, t-butyl peroxy-2-ethylhexanoate, t-butyl perpivalate, t-butyl peroxy isopropyl carbonate, di-t-butyl peroxy hexahydro terephthalate, 1,1-bis(t-butyl peroxy)-3,3,5-trimethylcyclohexane, 1,1-bis(t-amylperoxy)-3,3,5-trimethylcyclohexane, 1,1-bis(t-butyl peroxy)cyclohexane, and t-butyl peroxy-2-ethylhexyl monocarbonate and (b) azo compounds such as azobis isobutyronitrile and azobis dimethylvaleronitrile. These polymerization initiators may be used alone or in combination of two or more thereof.

Among the radical generating polymerization initiators listed above, (a) benzoyl peroxide, lauroyl peroxide, t-butyl perpivalate, di-t-butyl peroxy hexahydro terephthalate, azobis isobutyronitrile, and azobis dimethylvaleronitrile are low temperature decomposition type polymerization initiators, and (b) t-butyl peroxybenzoate, isopropyl-t-butyl peroxycarbonate, butyl perbenzoate, t-butyl peroxy-2-ethylhexanoate, t-butyl peroxy isopropyl carbonate, 1,1-bis(t-butyl peroxy)-3,3,5-trimethylcyclohexane, 1,1-bis(t-amylperoxy)-3,3,5-trimethylcyclohexane, 1,1-bis(t-butyl peroxy)cyclohexane, and t-butyl peroxy-2-ethylhexyl monocarbonate are high temperature decomposition type polymerization initiators.

The amount of the polymerization initiator to be used is preferably set so that the sum of the amount of the polymerization initiator used in the first copolymerization step and the amount of the polymerization initiator used in the second copolymerization step is, for example, not less than 0.1 parts by weight and not more than 0.5 parts by weight relative to 100 parts by weight of the monomer mixture. With this configuration, it is possible to obtain expandable resin particles having more excellent expandability.

The initiation step in accordance with an embodiment of the present invention may be (a) a step of initiating copolymerization of the monomer mixture in the presence of the first poorly water-soluble inorganic salt, the low temperature decomposition type polymerization initiator, and the high temperature decomposition type polymerization initiator, or (b) a step of initiating copolymerization of the monomer mixture in the presence of the first poorly water-soluble inorganic salt and the low temperature decomposition type polymerization initiator. In a case where the initiation step is the step of initiating copolymerization of the monomer mixture in the presence of the first poorly water-soluble inorganic salt and the low temperature decomposition type polymerization initiator, the high temperature decomposition type polymerization initiator may be added to the reaction mixture (aqueous suspension) after the initiation step, i.e., during polymerization.

The initiation step may be carried out (initiated) at a polymerization temperature of 70°C to 90°C or of 70°C or more and less than 90°C. In a case where the initiation step is a step in which copolymerization of the monomer mixture is initiated at a polymerization temperature of 70°C to 90°C or of 70°C or more and less than 90°C, the polymerization temperature may be changed, after the initiation step, that is, during polymerization, to a temperature higher than that at the initiation of the polymerization (e.g., more than 90°C and 110°C or less, or 90°C to 110°C).

In the copolymerization step in accordance with an embodiment of the present invention, it is preferable to use a chain transfer agent. The chain transfer agent is not particularly limited, and it is possible to use a known substance usable for polymerization of the methyl methacrylate-based resin. Examples of the chain transfer agent encompass (a) monofunctional chain transfer agents such as alkylmercaptans and thioglycolates and (b) polyfunctional chain transfer agents prepared by esterifying, with thioglycollic acid or 3-mercaptopropionic acid, hydroxyl groups of polyhydric alcohols (e.g., ethylene glycol, neopentyl glycol, trimethylolpropane, sorbitol, and the like). Examples of the alkylmercaptans encompass n-octyl mercaptan, n-dodecyl mercaptan, and t-dodecyl mercaptan. The chain transfer agent is preferably n-dodecyl mercaptan. The amount of the chain transfer agent to be used is, for example, preferably not less than 0.1 parts by weight and less than 0.5 parts by weight, relative to 100 parts by weight of the monomer mixture.

In the blowing agent impregnation step in accordance with an embodiment of the present invention, by impregnating a blowing agent in methyl methacrylate-based resin particles, which are the copolymer obtained in the copolymerization step, it is possible to obtain expandable methyl methacrylate-based resin particles.

The blowing agent impregnation step in accordance with an embodiment of the present invention can be carried out at any point in time, and may be carried out, for example, together with the second copolymerization step or after the second copolymerization step.

The blowing agent impregnation step in accordance with an embodiment of the present invention is preferably configured such that the blowing agent is impregnated in the obtained copolymer at a point in time when a polymerization conversion rate at which the monomers are polymerized to form a copolymer is 80% to 95%. In a case where the blowing agent is impregnated in the copolymer at a point in time when the polymerization conversion rate is not less than 80%, the blowing agent is moderately impregnated in an inner part of the copolymer. Thus, there is no fear that agglomeration of copolymers due to softening of the copolymer might occur, and a high production yield is achieved. In a case where the blowing agent is impregnated in the copolymer at a point in time when the polymerization conversion rate is not more than 95%, the blowing agent is sufficiently impregnated into the inner part of the copolymer. Thus, there is no fear that a double bubble structure (hard core) might be formed in expanded particles obtained by expanding resulting expandable resin particles. As a result, by carrying out in-mold molding with respect to the expanded particles, it is possible to obtain a foamed molded product having excellent surface quality.

In the blowing agent impregnation step in accordance with an embodiment of the present invention, the amount (usage amount) of the blowing agent to be impregnated in the methyl methacrylate-based resin particles, which are the copolymer, includes a preferable aspect and is identical to the amount of the blowing agent contained in the expandable resin particles, described in (Blowing agent) of [2. Expandable methyl methacrylate-based resin particles]. With this configuration, it is possible to not only obtain expandable resin particles having sufficient expandability, but also safely produce expandable resin particles without causing agglomeration of copolymers in the blowing agent impregnation step.

In the blowing agent impregnation step in accordance with an embodiment of the present invention, a treatment temperature (also referred to as an "impregnation temperature") and a treatment time (also referred to as an "impregnation time") during impregnation of the blowing agent in the copolymer are not particularly limited.

In the blowing agent impregnation step in accordance with an embodiment of the present invention, the impregnation temperature during impregnation of the blowing agent in the copolymer is preferably 95°C or more and 120°C or less, and more preferably 100°C or more and 117°C or less. In a case where the impregnation temperature is 95°C or more, the blowing agent is sufficiently impregnated into the inner part of the copolymer. Thus, there is no fear that a double bubble structure (hard core) might be formed in methyl methacrylate-based resin expanded particles obtained by expanding resulting expandable resin particles. As a result, by carrying out in-mold molding with respect to the expanded particles, it is possible to obtain a foamed molded product having excellent surface quality. In a case where the impregnation temperature is 120°C or less, a polymerization machine has a not-too-high internal pressure. Thus, expandable resin particles capable of providing expanded particles having a uniform bubble structure can be obtained without any need for impregnation equipment, which is heavy equipment, capable of withstanding a large pressure.

In the method for producing expandable methyl methacrylate-based resin particles in accordance with an embodiment of the present invention, the usage amount of the solvent includes a preferable aspect and is identical to the amount of the solvent contained in the expandable resin particles, described in [2. Expandable methyl methacrylate-based resin particles]. In a case where a solvent (e.g., a solvent having a boiling point of 50°C or more) is used, the solvent is preferably added to the reaction mixture (aqueous suspension) immediately before or simultaneously with the blowing agent impregnation step.

In the present production method, in a case where a solvent is used, the solvent may be used in both the copolymerization step (e.g., immediately before the blowing agent impregnation step) and the blowing agent impregnation step, and the solvent may be added to the reaction mixture (aqueous suspension) in both the steps. The following description will discuss a case in which a solvent is used in both the copolymerization step (e.g., immediately before the blowing agent impregnation step) and the blowing agent impregnation step. In this case, a total amount of the solvent used in both the steps is preferably more than 0.0 parts by weight and not more than 2.0 parts by weight, more preferably more than 0.0 parts by weight and not more than 1.5 parts by weight, further preferably more than 0.0 parts by weight and not more than 1.0 part by weight, further preferably more than 0.0 parts by weight and less than 1.0 part by weight, and particularly preferably more than 0.0 parts by weight and less than 0.5 parts by weight, relative to 100 parts by weight of a copolymer. Moreover, in this case, a total amount of (i) the total amount of the solvent used in both the steps and (ii) a usage amount of an acrylic ester monomer is preferably 3.0 parts by weight to 5.0 parts by weight relative to 100 parts by weight of the copolymer.

In order to obtain expandable resin particles that can provide a foamed molded product having excellent strength, an aromatic monomer (e.g., aromatic vinyl compounds such as styrene, α-methylstyrene, paramethylstyrene, t-butylstyrene, and chlorostyrene) may be used to prepare a copolymer in the present production method. For example, the monomer mixture may contain an aromatic monomer. A solvent used in the present production method may contain an aromatic compound such as xylene or toluene. In other words, an aromatic compound may be used in the present production method.

Meanwhile, in order to obtain expandable resin particles that can provide a foamed molded product with a small amount of residue after burning, amounts of the aromatic monomer and the aromatic compound used in the present production method are preferably set as small as possible. In the present production method, a contained amount of the aromatic monomer relative to 100 parts by weight of the monomer mixture is preferably not more than 2.5 parts by weight, more preferably less than 2.5 parts by weight, more preferably not more than 2.0 parts by weight, more preferably not more than 1.5 parts by weight, further preferably not more than 1.0 part by weight, further more preferably less than 1.0 part by weight, particularly preferably less than 0.5 parts by weight, and most preferably 0 parts by weight. That is, it is most preferable that the monomer mixture in the present production method does not contain an aromatic monomer. Moreover, in the present production method, a contained amount of the aromatic compound relative to 100 parts by weight of a solvent is preferably not more than 2.5 parts by weight, more preferably less than 2.5 parts by weight, more preferably not more than 2.0 parts by weight, more preferably not more than 1.5 parts by weight, further preferably not more than 1.0 part by weight, further more preferably less than 1.0 part by weight, particularly preferably less than 0.5 parts by weight, and most preferably 0 parts by weight. That is, it is most preferable that the solvent in the present production method does not contain an aromatic compound. Furthermore, in the present production method, a usage amount of the aromatic compound relative to 100 parts by weight of a copolymer is preferably not more than 2.5 parts by weight, more preferably less than 2.5 parts by weight, more preferably not more than 2.0 parts by weight, more preferably not more than 1.5 parts by weight, further preferably not more than 1.0 part by weight, further more preferably less than 1.0 part by weight, particularly preferably less than 0.5 parts by weight, and most preferably 0 parts by weight. That is, it is most preferable that an aromatic compound is not used in the present production method.

[4. Methyl methacrylate-based resin expanded particles]

Methyl methacrylate-based resin expanded particles in accordance with an embodiment of the present invention are expanded particles obtained by expanding the expandable methyl methacrylate-based resin particles described in [2. Expandable methyl methacrylate-based resin particles] or the expandable methyl methacrylate-based resin particles produced by the production method described in [3. Method for producing expandable methyl methacrylate-based resin particles].

The "methyl methacrylate-based resin expanded particles in accordance with an embodiment of the present invention" may be hereinafter referred to as "the present expanded particles".

The present expandable resin particles can be transformed into expanded particles by a common expansion method. Specifically, methyl methacrylate-based resin expanded particles can be obtained by, for example, sequentially carrying out the following procedures (1) through (3): (1) expandable resin particles are introduced into a pressurization type expansion machine (e.g., BHP available from Obiraki Industry Co., Ltd.); (2) steam (e.g., water vapor) is blown into the expansion machine at a steam blowing pressure of 0.10 MPa to 0.16 MPa and at an internal pressure in the expansion machine of 0.005 MPa to 0.030 MPa, and the expandable resin particles are heated; and (3) by the above procedure (2), the expandable resin particles are expanded up to a desired expanding ratio (e.g., a volume magnification of 60 times), and thus expanded particles are obtained.

Expansion of expandable methyl methacrylate-based resin particles can also be said to be expansion that is preliminarily carried out so that a methyl methacrylate-based resin foamed molded product (described later) is obtained from the expandable methyl methacrylate-based resin particles. Thus, expansion of expandable methyl methacrylate-based resin particles may be referred to as "pre-expansion", and methyl methacrylate-based resin expanded particles may be referred to as "methyl methacrylate-based pre-expanded particles". An expansion machine (e.g., an expansion machine used to measure the time (A)) used to expand the expandable methyl methacrylate-based resin particles may be referred to as "pre-expansion machine".

Since the present expanded particles have the above described configuration, the volume (B) is less than 140 cm$^3$, and therefore the expansion rate is low. In addition, since the present expanded particles have the above described configuration, the volume (C) is more than 160 cm$^3$, and therefore the present expanded particles are excellent in shrinkage inhibitive property. That is, the present expanded particles are advantageously capable of providing a foamed molded product that is excellent in internal fusibility.

[5. Methyl methacrylate-based resin foamed molded product]

A methyl methacrylate-based resin foamed molded product in accordance with an embodiment of the present invention is a foamed molded product obtained by carrying out in-mold molding with respect to the methyl methacrylate-based resin expanded particles described in [4. Methyl methacrylate-based resin expanded particles].

The "methyl methacrylate-based resin foamed molded product in accordance with an embodiment of the present invention" may be hereinafter referred to as "the present foamed molded product".

The present expanded particles can be molded into a foamed molded product by a common in-mold molding method. Specifically, a foamed molded product can be obtained by, for example, sequentially carrying out the following procedures (1) through (3): (1) expanded particles are charged into a molding machine (e.g., PEONY-205DS available from DAISEN) having a mold; (2) steam (e.g., water vapor) is blown into the mold at a steam blowing pressure of 0.15 MPa to 0.25 MPa, and in-mold molding is carried out by vacuum-suction-heating at a pressure in the mold of 0.030 Mpa to 0.060 MPa until the foaming pressure becomes 0.070 MPa to 0.080 MPa, and thus the expanded particles are fused together; (3) after the foaming pressure reaches 0.070 MPa to 0.080 MPa, expanded particles are left to stand in the mold at 80°C to 110°C for 1000 seconds, and then a foamed molded product is taken out to obtain a foamed molded product.

Since the present foamed molded product has the above described configuration, the present foamed molded product is excellent in internal fusibility. The present foamed molded product preferably has the ratio (D) of 80% or more. As a result, the present foamed molded product can be suitably used as an evaporative pattern.

[6. Evaporative pattern]

An evaporative pattern in accordance with an embodiment of the present invention includes the methyl methacrylate-based resin foamed molded product described in [5. Methyl methacrylate-based resin foamed molded product].

The evaporative pattern in accordance with an embodiment of the present invention has excellent internal fusibility. Therefore, the evaporative pattern can be suitably used for various types of metal casting.

An embodiment of the present invention may be configured as follows.

<1> Expandable methyl methacrylate-based resin particles containing: a base resin including, as constitutional units, a methyl methacrylate unit and an acrylic ester unit; and a blowing agent, the expandable methyl methacrylate-based resin particles satisfying the following conditions (a) through (c): (a) in a case where the expandable methyl methacrylate-based resin particles are expanded at a steam blowing pressure of 0.10 MPa to 0.16 MPa and at an internal pressure in an expansion machine of 0.005 MPa to 0.030 MPa, a time (A) is less than 810 seconds, the time (A) being a time taken for the expandable methyl methacrylate-based resin particles to become methyl methacrylate-based resin expanded particles having a volume magnification of 60 times; (b) in a case where 100 cm$^3$ of methyl methacrylate-based resin expanded particles obtained by expanding the expandable methyl methacrylate-based resin particles are heated by steam at 100°C for 30 seconds and are then left to stand at 25°C for 1 minute, the methyl methacrylate-based resin expanded particles then have a volume (B) of less than 140 cm$^3$; and (c) in a case where 100 cm$^3$ of methyl methacrylate-based resin expanded particles obtained by expanding the expandable methyl methacrylate-based resin particles are heated by steam at 100°C for 180 seconds and are then left to stand at 25°C for 1 minute, the methyl methacrylate-based resin expanded particles then have a volume (C) of more than 160 cm$^3$.

<2> The expandable methyl methacrylate-based resin particles as set forth in claim 1, further satisfying the following

EP 4 174 121 A1

condition (d): (d) in a fracture surface of a methyl methacrylate-based resin foamed molded product obtained by fracturing the methyl methacrylate-based resin foamed molded product that is obtained by molding methyl methacrylate-based resin expanded particles which are obtained by expanding the expandable methyl methacrylate-based resin particles, a ratio (D) of methyl methacrylate-based resin expanded particles fractured at portions other than interfaces between the methyl methacrylate-based resin expanded particles is 80% or more.

<3> The expandable methyl methacrylate-based resin particles described in <1> or <2>, further containing a solvent.

<4> The expandable methyl methacrylate-based resin particles described in <3>, in which a contained amount of the solvent is more than 0.0 parts by weight and not more than 2.0 parts by weight, relative to 100 parts by weight of the base resin.

<5> Expandable methyl methacrylate-based resin particles, in which: the expandable methyl methacrylate-based resin particles contain a blowing agent and a base resin which includes, as constitutional units, a methyl methacrylate unit and an acrylic ester unit; the expandable methyl methacrylate-based resin particles contain no solvent or contain more than 0.0 parts by weight and not more than 2.0 parts by weight of a solvent relative to 100 parts by weight of the base resin; in the base resin, relative to a total amount of 100 parts by weight of the methyl methacrylate unit and the acrylic ester unit, (a) a contained amount of the methyl methacrylate unit is 95.0 parts by weight to 98.0 parts by weight, and (b) a contained amount of the acrylic ester unit is 2.0 parts by weight to 5.0 parts by weight; and a total amount of the acrylic ester unit and the solvent relative to 100 parts by weight of the base resin is 3.0 parts by weight to 5.0 parts by weight.

<6> The expandable methyl methacrylate-based resin particles described in <4> or <5>, in which the solvent contains cyclohexane.

<7> The expandable methyl methacrylate-based resin particles described in any one of <1> through <6>, in which the acrylic ester unit is a butyl acrylate unit.

<8> The expandable methyl methacrylate-based resin particles described in any one of <1> through <7>, in which a volume-average particle size of the expandable methyl methacrylate-based resin particles is 0.5 mm to 1.4 mm.

<9> The expandable methyl methacrylate-based resin particles described in any one of <1> through <8>, in which: (i) the base resin contains no constitutional unit derived from an aromatic monomer or contains more than 0.0 parts by weight and not more than 2.5 parts by weight of a constitutional unit derived from an aromatic monomer, relative to 100 parts by weight of the base resin; and (ii) the expandable methyl methacrylate-based resin particles contain no aromatic compound or contain more than 0.0 parts by weight and not more than 2.5 parts by weight of an aromatic compound, relative to 100 parts by weight of the base resin.

<10> Methyl methacrylate-based resin expanded particles obtained by expanding the expandable methyl methacrylate-based resin particles described in any one of <1> through <9>.

<11> A methyl methacrylate-based resin foamed molded product obtained by in-mold molding of the methyl methacrylate-based resin expanded particles described in < 10>.

<12> An evaporative pattern, including the methyl methacrylate-based resin foamed molded product described in <11>.

<13> A method for producing expandable methyl methacrylate-based resin particles including a copolymerization step of copolymerizing a monomer mixture containing a methyl methacrylate monomer and an acrylic ester monomer, and a blowing agent impregnation step of impregnating, with a blowing agent, a copolymer which has been obtained, in which: the copolymerization step includes (a) an initiation step of initiating copolymerization of the monomer mixture in the presence of a first poorly water-soluble inorganic salt in an amount of 0.08 parts by weight to 1.20 parts by weight relative to 100 parts by weight of the monomer mixture, and (b) an addition step of adding, to a reaction mixture, a second poorly water-soluble inorganic salt in an amount of 0.08 parts by weight to 0.50 parts by weight relative to 100 parts by weight of the monomer mixture at a point in time when a polymerization conversion rate is 35% to 70% after the initiation step; in the copolymerization step, an amount of the methyl methacrylate monomer to be used is 95.0 parts by weight to 98.0 parts by weight, and an amount of the acrylic ester monomer to be used is 2.0 parts by weight to 5.0 parts by weight, relative to a total amount of 100 parts by weight of the methyl methacrylate monomer and the acrylic ester monomer to be used; and in the copolymerization step and/or the blowing agent impregnation step, (i) no solvent is used, or a solvent is used in an amount of more than 0.0 parts by weight and not more than 2.0 parts by weight, relative to 100 parts by weight of the copolymer, and (ii) a total amount of the acrylic ester monomer and the solvent to be used, relative to 100 parts by weight of the copolymer, is 3.0 parts by weight to 5.0 parts by weight.

<14> The method described in <13>, in which: (i) the monomer mixture contains no aromatic monomer or contains an aromatic monomer in an amount of more than 0.0 parts by weight and not more than 2.5 parts by weight, relative to 100 parts by weight of the monomer mixture; and (ii) no aromatic compound is used, or an aromatic compound is used in an amount of more than 0.0 parts by weight and not more than 2.5 parts by weight, relative to 100 parts by weight of the copolymer.

Examples

The following description will discuss an embodiment of the present invention in detail with reference to Examples and Comparative Examples. Note that the present invention is not limited to these examples.

(Polymerization conversion rate of expandable methyl methacrylate-based resin particles)

During polymerization, a sample was taken from an aqueous suspension, and the aqueous suspension thus taken as a sample was filtered. The weight of a resin component remaining on filter paper was measured, and the weight thus measured was regarded as a weight before heating. Next, a polymerization inhibitor was added to the resin component, and then the resin component was heated at 150°C for 30 minutes, and thus a volatile component was removed therefrom. Thereafter, the weight of a resulting resin component was measured, and the weight thus measured was regarded as a weight after heating. A polymerization conversion rate was calculated according to the following formula:

$$\text{Polymerization conversion rate (\%) = weight after heating / weight before heating} \times 100.$$

(Expandability of expandable methyl methacrylate-based resin particles)

Expandable resin particles were sieved to collect expandable resin particles having a particle diameter of 0.5 mm to 1.4 mm. The following procedures (1) through (4) were sequentially carried out using the collected expandable resin particles, and a time (A) (heating time) of the expandable resin particles until expanded particles having a volume magnification of 60 times were obtained was measured: (1) the collected expandable resin particles were introduced into a pressurization type expansion machine (i.e., BHP available from Obiraki Industry Co., Ltd.); (2) next, steam was blown into the expansion machine at a steam blowing pressure of 0.10 MPa to 0.16 MPa and at an internal pressure in the expansion machine of 0.005 MPa to 0.030 MPa, and the expandable resin particles were heated; (3) at regular intervals, expanded particles obtained by expanding the expandable resin particles were taken out from the expansion machine, and a volume magnification of the expanded particles was measured; (4) the time (A) from when the steam was blown with respect to the expandable resin particles to when expanded particles having a volume magnification of 60 times were obtained was measured. Here, the volume magnification of the expanded particles was obtained by sequentially carrying out the following procedures (1) through (3): (1) 10 g of expanded particles were weighed and introduced into a 1000 $cm^3$ graduated cylinder; (2) a volume of 10 g of the expanded particles was measured from the graduation of the graduated cylinder; and (3) a volume magnification of the expanded particles was calculated by the following formula.

$$\text{Volume magnification } (cm^3/g) = \text{volume of expanded particles } (cm^3)/10 \text{ g}$$

Expandability of the expandable resin particles was evaluated from the measured time (A) on the basis of the following criteria.

Excellent (E): The time (A) is 710 seconds or less.
Good (G): The time (A) is more than 710 seconds and less than 810 seconds.
Poor (P): The time (A) is 810 seconds or more.

(Expandability of methyl methacrylate-based resin expanded particles)

Expandable resin particles were sieved to collect expandable resin particles having a particle diameter of 0.5 mm to 1.4 mm. The following procedures (1) through (3) were sequentially carried out using the collected expandable resin particles to obtain expanded particles having a volume magnification of 60 times: (1) expandable resin particles were introduced into a pressurization type expansion machine (i.e., BHP available from Obiraki Industry Co., Ltd.); (2) steam was blown into the expansion machine at a steam blowing pressure of 0.10 MPa to 0.16 MPa and at an internal pressure in the expansion machine of 0.005 MPa to 0.030 MPa, and the expandable resin particles were heated; (3) by the above procedure (2), the expandable resin particles were expanded up to a volume magnification of 60 times, and thus expanded particles having the volume magnification of 60 times were obtained.

Using the obtained expanded particles, the following procedures (1) through (5) were sequentially carried out, and the volume (B) of the expanded particles was measured: (1) 100 cm$^3$ of the expanded particles having the volume magnification of 60 times were weighed and introduced into a steamer having a blow-out port; (2) steam at 100°C was fed to the steamer and the expanded particles were heated for 30 seconds; (3) after the heating, the expanded particles were taken out from the steamer and left to stand at 25°C for 1 minute; (4) the expanded particles were introduced into a 1000 cm$^3$ graduated cylinder; and (5) the volume (B) of the expanded particles was measured from the graduation of the graduated cylinder. Expandability of the expanded particles was evaluated from the measured volume (B) on the basis of the following criteria. Note that a smaller volume (B), that is, lower expandability of the expanded particles was evaluated more highly.

Excellent (E): The volume (B) is 130 cm$^3$ or less.
Good (G): The volume (B) is more than 130 cm$^3$ and less than 140 cm$^3$.
Poor (P): The volume (B) is 140 cm$^3$ or more.

(Shrinkage inhibitive property of methyl methacrylate-based resin expanded particles)

With the method described in the section (Expandability of methyl methacrylate-based resin expanded particles), expanded particles having a volume magnification of 60 times were obtained. Using the obtained expanded particles, the following procedures (1) through (5) were sequentially carried out, and the volume (C) of the expanded particles was measured: (1) 100 cm$^3$ of the expanded particles having the volume magnification of 60 times were weighed and introduced into a steamer having a blow-out port; (2) steam at 100°C was fed to the steamer and the expanded particles were heated for 180 seconds; (3) after the heating, the expanded particles were taken out from the steamer and left to stand at 25°C for 1 minute; (4) the expanded particles were introduced into a 1000 cm$^3$ graduated cylinder; and (5) the volume (C) of the expanded particles was measured from the graduation of the graduated cylinder. Shrinkage inhibitive property of the expanded particles was evaluated from the measured volume (C) on the basis of the following criteria.

Excellent (E): The volume (C) is more than 165 cm$^3$
Good (G): The volume (C) is more than 160 cm$^3$ and 165 cm$^3$ or less
Poor (P): The volume (C) is 160 cm$^3$ or less.

(Internal fusibility of methyl methacrylate-based resin foamed molded product)

Expandable resin particles were sieved to collect expandable resin particles having a particle diameter of 0.5 mm to 1.4 mm.

Using the collected expandable resin particles, the following procedures (1) through (8) were sequentially carried out to obtain a foamed molded product: (1) expandable resin particles were introduced into a pressurization type expansion machine (i.e., BHP available from Obiraki Industry Co., Ltd.); (2) steam was blown into the expansion machine at a steam blowing pressure of 0.10 MPa to 0.16 MPa and at an internal pressure in the expansion machine of 0.005 MPa to 0.030 MPa, and the expandable resin particles were heated; (3) by the above procedure (2), the expandable resin particles were expanded up to a volume magnification of 60 times; (4) the obtained expanded particles were left to stand at normal temperature (25°C) for three days to obtain expanded particles having the volume magnification of 60 times; (5) the expanded particles having the volume magnification of 60 times were charged into a molding machine (PEONY-205DS available from DAISEN) having a mold having a length of 2000 mm, a width of 1000 mm and a thickness of 525 mm; (6) steam was blown into the mold at a steam blowing pressure of 0.15 MPa to 0.25 MPa, and in-mold molding was carried out by vacuum-suction-heating at a pressure in the mold of 0.030 Mpa to 0.060 MPa until the foaming pressure became 0.070 MPa to 0.080 MPa, and thus the expanded particles were fused together; (7) after the foaming pressure reached 0.070 MPa to 0.080 MPa, expanded particles were left to stand in the mold at 80°C to 110°C for 1000 seconds, and then a foamed molded product was taken out; and (8) the foamed molded product thus taken out was left to stand at 60°C for three days to obtain a foamed molded product. The resulting foamed molded product had a length of 2000 mm, a width of 1000 mm, and a thickness of 525 mm.

With use of the obtained foamed molded product, the following procedures (1) through (3) were sequentially carried out, and the ratio (D) in the fracture surface of the foamed molded product was measured. (1) the foamed molded product was cut perpendicularly to the thickness direction of the foamed molded product using a hot-wire slicer so that the foamed molded product was evenly divided into five parts in the thickness direction; (2) a plane perpendicular to the thickness direction of the middle one of the five divided parts (i.e., a part between 210 mm and 315 mm in the thickness direction of the foamed molded product prior to cutting) was folded along the width direction at the center in the length direction, and thus the foamed molded product was fractured; and (3) the obtained fracture surface was visually observed, and all particles constituting the fracture surface and expanded particles that were fractured at portions other than particle-to-particle interfaces were measured, and the ratio (D) was calculated based on the following formula:

$$\text{Ratio (D) (\%)} = \text{the number of particles fractured at portions other than particle-to-particle interfaces / the number of particles constituting the fracture surface} \times 100.$$

Based on the ratio (D) thus obtained, internal fusibility of the foamed molded product was evaluated in accordance with the following criteria.

Excellent (E): The ratio (D) is 90% or more
Good (G): The ratio (D) is 80% or more and less than 90%
Poor (P): The ratio (D) is less than 80%.

(Evaluation of residue remaining after burning of methyl methacrylate-based resin foamed molded product)

Based on the description in the section (Internal fusibility of methyl methacrylate-based resin foamed molded product), a foamed molded product was obtained. Approximately 7 g (approximately 300 cm$^3$) of the resulting foamed molded product was ignited with a gas burner, and the foamed molded product was burned. Then, a state of soot produced after burning of the foamed molded product was visually observed.

(Example 1)

A 6 L-autoclave with a stirrer was charged with 150 parts by weight of water, 0.15 parts by weight of tricalcium phosphate as a first poorly water-soluble inorganic salt, 0.0075 parts by weight of sodium $\alpha$-olefin sulfonate, 0.08 parts by weight of lauroyl peroxide, 0.1 parts by weight of 1,1-bis(t-butyl peroxy)cyclohexane, 0.1 parts by weight of 1,6-hexanediol diacrylate as a crosslinking agent, and 0.24 parts by weight of n-dodecyl mercaptan, and thus a mixed solution containing the first poorly water-soluble inorganic salt was prepared. Thereafter, 97.5 parts by weight of methyl methacrylate and 2.5 parts by weight of butyl acrylate as a monomer mixture were charged into the mixed solution, and thus an aqueous suspension was prepared. Then, the aqueous suspension was heated to a temperature of 80°C so that polymerization was initiated, i.e., an initiation step was carried out. A polymerization conversion rate measured after 1 hour and 45 minutes had elapsed since the initiation of polymerization (after the initiation step) was 40% to 50%. After 1 hour and 45 minutes had elapsed since the initiation of polymerization (after the initiation step), 0.12 parts by weight of tricalcium phosphate as a second poorly water-soluble inorganic salt was added to a reaction mixture (the aqueous suspension), and thus an addition step was carried out. The above initiation step and addition step can also be said to be a first copolymerization step.
After another 2 hours and 35 minutes had elapsed since then, 0.5 parts by weight of cyclohexane as a solvent and 9 parts by weight of normal rich butane (a weight ratio between normal butane and isobutane (normal butane / isobutane) is 70/30 in the normal rich butane) as a blowing agent were charged into the aqueous suspension. Thereafter, the aqueous suspension was heated to a temperature of 101°C. Then, by maintaining the temperature of the aqueous suspension at 101°C for 10 hours, copolymerization and impregnation of the blowing agent in a copolymer (a copolymerization step (which can be said to be a second copolymerization step) and a blowing agent impregnation step) were carried out. Thereafter, the aqueous suspension was cooled. After the aqueous suspension was cooled, a resulting product was cleaned, dehydrated, and dried. Consequently, expandable methyl methacrylate-based resin particles were obtained.
The expandable methyl methacrylate-based resin particles thus obtained were sieved with sieves having respective mesh sizes of 0.500 mm and 1.400 mm. Through such an operation, expandable methyl methacrylate-based resin particles having a particle diameter of 0.500 mm to 1.400 mm were collected.
The expandability of expandable methyl methacrylate-based resin particles, the expandability and the shrinkage inhibitive property of methyl methacrylate-based resin expanded particles, and the internal fusibility of a methyl methacrylate-based resin foamed molded product were evaluated in accordance with the above described method. The result of the evaluation is shown in Table 1.

(Example 2)

The same operations as those in Example 1 were carried out, except that the monomer mixture to be used was changed to 96.5 parts by weight of methyl methacrylate and 3.5 parts by weight of butyl acrylate. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Example 3)

The same operations as those in Example 1 were carried out, except that the monomer mixture to be used was changed to 96.5 parts by weight of methyl methacrylate and 3.5 parts by weight of butyl acrylate, and the amount of cyclohexane was changed to 1.0 part by weight. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Example 4)

The same operations as those in Example 1 were carried out, except that the monomer mixture to be used was changed to 97.0 parts by weight of methyl methacrylate and 3.0 parts by weight of butyl acrylate, and the amount of cyclohexane was changed to 1.5 parts by weight. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Example 5)

The same operations as those in Example 1 were carried out, except that the monomer mixture to be used was changed to 95.0 parts by weight of methyl methacrylate and 5.0 parts by weight of butyl acrylate, and the amount of cyclohexane was changed to 0 parts by weight (i.e., no cyclohexane was used). As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Example 6)

The same operations as those in Example 1 were carried out, except that the monomer mixture to be used was changed to 98.0 parts by weight of methyl methacrylate, 2.0 parts by weight of butyl acrylate, and the amount of cyclohexane was changed to 1.0 part by weight. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Comparative Example 1)

The same operations as those in Example 1 were carried out, except that the monomer mixture to be used was changed to 95.0 parts by weight of methyl methacrylate, 5.0 parts by weight of butyl acrylate, and the solvent to be used was changed to 1.5 parts by weight of cyclohexane and 1.0 part by weight of toluene. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Comparative Example 2)

The same operations as those in Example 1 were carried out, except that the monomer mixture to be used was changed to 96.0 parts by weight of methyl methacrylate and 4.0 parts by weight of butyl acrylate, and the amount of cyclohexane was changed to 1.5 parts by weight. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Comparative Example 3)

The same operations as those in Example 1 were carried out, except that the monomer mixture to be used was changed to 94.5 parts by weight of methyl methacrylate and 5.5 parts by weight of butyl acrylate, and the amount of cyclohexane was changed to 0 parts by weight (i.e., no cyclohexane was used). As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Comparative Example 4)

The same operations as those in Example 1 were carried out, except that the amount of cyclohexane was changed to 0 parts by weight (i.e., no cyclohexane was used). As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Comparative Example 5)

The same operations as those in Example 1 were carried out, except that the monomer mixture to be used was changed to 98.5 parts by weight of methyl methacrylate and 1.5 parts by weight of butyl acrylate, and the amount of cyclohexane was changed to 1.5 parts by weight. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Comparative Example 6)

The same operations as those in Example 1 were carried out, except that the monomer mixture to be used was changed to 96.5 parts by weight of methyl methacrylate and 3.5 parts by weight of butyl acrylate, and the amount of cyclohexane was changed to 2.0 parts by weight. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

(Comparative Example 7)

The same operations as those in Example 1 were carried out, except that the monomer mixture to be used was changed to 97.5 parts by weight of methyl methacrylate, 2.5 parts by weight of butyl acrylate, and the solvent to be used was changed to 1.5 parts by weight of cyclohexane and 1.0 part by weight of toluene. As a result, expandable methyl methacrylate-based resin particles having a particle diameter of 0.500 mm to 1.400 mm were obtained. Evaluation was carried out with respect to each evaluation item in the same manner as in Example 1. The result of the evaluation is shown in Table 1.

With use of the expandable methyl methacrylate-based resin particles having particle diameters of 0.500 mm to 1.400 mm obtained in Examples 1 through 6 and Comparative Examples 1 through 7, methyl methacrylate-based resin foamed molded products were obtained according to the above described method, and the residue after burning of each of the methyl methacrylate-based resin foamed molded products was evaluated. As a result, the foamed molded products obtained by using the expandable methyl methacrylate-based resin particles obtained in Examples 1 through 6 and Comparative Examples 2 through 6 showed no visible soot, i.e., little residue (soot) was generated by burning. Moreover, the foamed molded products obtained by using the expandable methyl methacrylate-based resin particles obtained in Comparative Examples 1 and 7 showed visible soot, i.e., a residue (soot) was generated by burning.

[Table 1]

| | Ex. 1 | Ex. 2 | Ex. 3 | Ex. 4 | Ex. 5 | Ex. 6 | Com. Ex. 1 | Com. Ex. 2 | Com. Ex. 3 | Com. Ex. 4 | Com. Ex. 5 | Coin. Ex. 6 | Com. Ex. 7 |
|---|---|---|---|---|---|---|---|---|---|---|---|---|---|
| Methyl methacrylate | 97.5 | 96.5 | 96.5 | 97.0 | 95.0 | 98.0 | 95.0 | 96.0. | 94.5 | 97.5 | 98.5 | 96.5 | 97.5 |
| Butyl acrylate | 2.5 | 3.5 | 3.5 | 3.0 | 5.0 | 2.0 | 5.0 | 4.0 | 5.5 | 2.5 | 1.5 | 3.5 | 2.5 |
| Toluene | - | - | - | - | - | - | 1.0 | - | - | - | - | - | 1.0 |
| Cyclohexane | 0.5 | 0.5 | 1.0 | 1.5 | - | 1.0 | 1.5 | 1.5 | - | - | 1.5 | 2.0 | 1.5 |
| Expandability of expandable resin particles | G | E | E | E | E | G | E | G | E | P | P | E | G |
| Expandability of expanded particles | E | E | G | G | G | E | P | P | P | E | E | P | G |
| Shrinkage inhibitive property of expanded particles | E | G | G | G | G | E | P | G | P | E | E | P | P |
| Internal fusibility of molded product | E | G | G | G | G | E | P | P | P | E | E | P | P |

Industrial Applicability

According to an embodiment of the present invention, it is possible to provide expandable methyl methacrylate-based resin particles that are capable of efficiently providing a foamed molded product which is excellent in internal fusibility. Therefore, an embodiment of the present invention is suitably applicable to an evaporative pattern for use in metal casting by a full mold technique.

**Claims**

1. Expandable methyl methacrylate-based resin particles comprising: a base resin including, as constitutional units, a methyl methacrylate unit and an acrylic ester unit; and a blowing agent, said expandable methyl methacrylate-based resin particles satisfying the following conditions (a) through (c):

    (a) in a case where said expandable methyl methacrylate-based resin particles are expanded at a steam blowing pressure of 0.10 MPa to 0.16 MPa and at an internal pressure in an expansion machine of 0.005 MPa to 0.030 MPa, a time (A) is less than 810 seconds, the time (A) being a time taken for said expandable methyl methacrylate-based resin particles to become methyl methacrylate-based resin expanded particles having a volume magnification of 60 times;

    (b) in a case where 100 $cm^3$ of methyl methacrylate-based resin expanded particles obtained by expanding said expandable methyl methacrylate-based resin particles are heated by steam at 100°C for 30 seconds and are then left to stand at 25°C for 1 minute, the methyl methacrylate-based resin expanded particles then have a volume (B) of less than 140 $cm^3$; and

    (c) in a case where 100 $cm^3$ of methyl methacrylate-based resin expanded particles obtained by expanding said expandable methyl methacrylate-based resin particles are heated by steam at 100°C for 180 seconds and are then left to stand at 25°C for 1 minute, the methyl methacrylate-based resin expanded particles then have a volume (C) of more than 160 $cm^3$.

2. The expandable methyl methacrylate-based resin particles as set forth in claim 1, further satisfying the following condition (d):

    (d) in a fracture surface of a methyl methacrylate-based resin foamed molded product obtained by fracturing the methyl methacrylate-based resin foamed molded product that is obtained by molding methyl methacrylate-based resin expanded particles which are obtained by expanding said expandable methyl methacrylate-based resin particles, a ratio (D) of methyl methacrylate-based resin expanded particles fractured at portions other than interfaces between the methyl methacrylate-based resin expanded particles is 80% or more.

3. The expandable methyl methacrylate-based resin particles as set forth in claim 1 or 2, further comprising a solvent.

4. The expandable methyl methacrylate-based resin particles as set forth in claim 3, wherein a contained amount of the solvent is more than 0.0 parts by weight and not more than 2.0 parts by weight, relative to 100 parts by weight of the base resin.

5. Expandable methyl methacrylate-based resin particles, wherein:

    said expandable methyl methacrylate-based resin particles comprise a blowing agent and a base resin which includes, as constitutional units, a methyl methacrylate unit and an acrylic ester unit;
    said expandable methyl methacrylate-based resin particles contain no solvent or contain more than 0.0 parts by weight and not more than 2.0 parts by weight of a solvent relative to 100 parts by weight of the base resin;
    in the base resin, relative to a total amount of 100 parts by weight of the methyl methacrylate unit and the acrylic ester unit,

        (a) a contained amount of the methyl methacrylate unit is 95.0 parts by weight to 98.0 parts by weight, and
        (b) a contained amount of the acrylic ester unit is 2.0 parts by weight to 5.0 parts by weight; and

    a total amount of the acrylic ester unit and the solvent relative to 100 parts by weight of the base resin is 3.0 parts by weight to 5.0 parts by weight.

6. The expandable methyl methacrylate-based resin particles as set forth in claim 4 or 5, wherein the solvent contains cyclohexane.

7. The expandable methyl methacrylate-based resin particles as set forth in any one of claims 1 through 6, wherein the acrylic ester unit is a butyl acrylate unit.

8. The expandable methyl methacrylate-based resin particles as set forth in any one of claims 1 through 7, wherein a volume-average particle size of said expandable methyl methacrylate-based resin particles is 0.5 mm to 1.4 mm.

9. The expandable methyl methacrylate-based resin particles as set forth in any one of claims 1 through 8, wherein:

(i) the base resin contains no constitutional unit derived from an aromatic monomer or contains more than 0.0 parts by weight and not more than 2.5 parts by weight of a constitutional unit derived from an aromatic monomer, relative to 100 parts by weight of the base resin; and
(ii) said expandable methyl methacrylate-based resin particles contain no aromatic compound or contain more than 0.0 parts by weight and not more than 2.5 parts by weight of an aromatic compound, relative to 100 parts by weight of the base resin.

10. Methyl methacrylate-based resin expanded particles obtained by expanding expandable methyl methacrylate-based resin particles recited in any one of claims 1 through 9.

11. A methyl methacrylate-based resin foamed molded product obtained by in-mold molding of methyl methacrylate-based resin expanded particles recited in claim 10.

12. An evaporative pattern, comprising a methyl methacrylate-based resin foamed molded product recited in claim 11.

13. A method for producing expandable methyl methacrylate-based resin particles, comprising a copolymerization step of copolymerizing a monomer mixture containing a methyl methacrylate monomer and an acrylic ester monomer, and a blowing agent impregnation step of impregnating, with a blowing agent, a copolymer which has been obtained, wherein:

the copolymerization step includes

(a) an initiation step of initiating copolymerization of the monomer mixture in the presence of a first poorly water-soluble inorganic salt in an amount of 0.08 parts by weight to 1.20 parts by weight relative to 100 parts by weight of the monomer mixture, and
(b) an addition step of adding, to a reaction mixture, a second poorly water-soluble inorganic salt in an amount of 0.08 parts by weight to 0.50 parts by weight relative to 100 parts by weight of the monomer mixture at a point in time when a polymerization conversion rate is 35% to 70% after the initiation step;

in the copolymerization step, an amount of the methyl methacrylate monomer to be used is 95.0 parts by weight to 98.0 parts by weight, and an amount of the acrylic ester monomer to be used is 2.0 parts by weight to 5.0 parts by weight, relative to a total amount of 100 parts by weight of the methyl methacrylate monomer and the acrylic ester monomer to be used; and
in the copolymerization step and/or the blowing agent impregnation step,

(i) no solvent is used, or a solvent is used in an amount of more than 0.0 parts by weight and not more than 2.0 parts by weight, relative to 100 parts by weight of the copolymer, and
(ii) a total amount of the acrylic ester monomer and the solvent to be used, relative to 100 parts by weight of the copolymer, is 3.0 parts by weight to 5.0 parts by weight.

14. The method as set forth in claim 13, wherein:

(i) the monomer mixture contains no aromatic monomer or contains an aromatic monomer in an amount of more than 0.0 parts by weight and not more than 2.5 parts by weight, relative to 100 parts by weight of the monomer mixture; and
(ii) no aromatic compound is used, or an aromatic compound is used in an amount of more than 0.0 parts by weight and not more than 2.5 parts by weight, relative to 100 parts by weight of the copolymer.

## INTERNATIONAL SEARCH REPORT

| International application No. |
| --- |
| PCT/JP2021/024453 |

**A. CLASSIFICATION OF SUBJECT MATTER**
C08J 9/16(2006.01)i
FI: C08J9/16 CEY

According to International Patent Classification (IPC) or to both national classification and IPC

**B. FIELDS SEARCHED**

Minimum documentation searched (classification system followed by classification symbols)
C08J9/16

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-233986 A (KANEGAFUCHI CHEM IND CO., LTD.) 28 August 2001 (2001-08-28) claims, paragraphs [0001], [0005], [0028], examples (reference example B2) | 1-12 |
| Y | claims, paragraphs [0001], [0005], [0028], examples (reference example B2) | 13, 14 |
| Y | JP 2001-270959 A (HITACHI CHEMICAL INDUSTRY CO., LTD.) 02 October 2001 (2001-10-02) examples | 13, 14 |
| Y | JP 2004-315671 A (KANEGAFUCHI CHEM IND CO., LTD.) 11 November 2004 (2004-11-11) abstract, paragraphs [0014], [0015], examples | 13, 14 |
| Y | JP 2001-123001 A (HITACHI CHEMICAL INDUSTRY CO., LTD.) 08 May 2001 (2001-05-08) examples | 13, 14 |

☒ Further documents are listed in the continuation of Box C.　　☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 02 August 2021 (02.08.2021) | 24 August 2021 (24.08.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

<div align="center">

**INTERNATIONAL SEARCH REPORT**

</div>

| | International application No. |
|---|---|
| | PCT/JP2021/024453 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-241256 A (KANEKA CORP.) 14 September 2006 (2006-09-14) entire text | 1-14 |
| A | JP 2019-112562 A (KANEKA CORP.) 11 July 2019 (2019-07-11) entire text | 1-14 |
| A | WO 2016/047490 A1 (KANEKA CORP.) 31 March 2016 (2016-03-31) entire text | 1-14 |

Form PCT/ISA/210 (continuation of second sheet) (January 2015)

INTERNATIONAL SEARCH REPORT
Information on patent family members

International application No.

PCT/JP2021/024453

| Patent Documents referred in the Report | Publication Date | Patent Family | Publication Date |
|---|---|---|---|
| JP 2001-233986 A | 28 Aug. 2001 | (Family: none) | |
| JP 2001-270959 A | 02 Oct. 2001 | (Family: none) | |
| JP 2004-315671 A | 11 Nov. 2004 | (Family: none) | |
| JP 2001-123001 A | 08 May 2001 | (Family: none) | |
| JP 2006-241256 A | 14 Sep. 2006 | (Family: none) | |
| JP 2019-112562 A | 11 Jul. 2019 | (Family: none) | |
| WO 2016/047490 A1 | 31 Mar. 2016 | US 2017/0291216 A1 entire text | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016047490 A
- JP 2015183111 A